# EUROPÄISCHE PATENTSCHRIFT

(11) **EP 3 512 626 B1**
(45) Veröffentlichungstag und Bekanntmachung des Hinweises auf die Patenterteilung: **07.04.2021**
(21) Anmeldenummer: 16770906.2
(22) Anmeldetag: 16.09.2016
(51) Int. Cl.: B01J 13/14, A61K 8/11, B01J 13/16, B01J 13/22, C11D 3/50, C11D 17/00, A61Q 13/00, D06M 23/12

(54) **FORMALDEHYDFREIE WIRKSTOFFKAPSELN**
FORMALDEHYDE-FREE ACTIVE SUBSTANCE CAPSULES
CAPSULES DE SUBSTANCES ACTIVES EXEMPTES DE FORMALDÉHYDE

(43) Veröffentlichungstag der Anmeldung: 24.07.2019
(73) Patentinhaber: Symrise AG, 37603 Holzminden (DE)
(72) Erfinder: ROST, Benjamin, 37619 Bodenwerder (DE)
(74) Vertreter: Daniels, Stefanie Lisa
(86) Internationale Anmeldenummer: PCT/EP2016/072083
(87) Internationale Veröffentlichungsnummer: WO 2018/050248

(56) Entgegenhaltungen:
- WO-A1-2014/044840
- GB-A- 2 184 992
- US-A1- 2006 063 001

## Beschreibung

### Gebiet der Erfindung

Die Erfindung befindet sich auf dem Gebiet der Wäschebehandlung und betrifft neue Wirkstoffkapseln mit einer inneren und einer äußeren Hülle, einem Verfahren zu ihrer Herstellung sowie deren Verwendung zur Ausrüstung von Textilien und der gleichen sowie in Waschmitteln und Wäscheweichspülmitteln.

### Technologischer Hintergrund

Unter dem Begriff "Kapsel" sind sphärische Aggregate zu verstehen, die mindestens einen festen oder flüssigen Kern enthalten, der von mindestens einer kontinuierlichen Hülle umschlossen ist. Die darin eingeschlossenen Wirkstoffe, insbesondere Parfümöle oder Riechstoffe, können durch Überzugsmaterialien verkapselt werden und dabei als Makrokapseln mit Durchmessern von etwa 0,1 bis etwa 5 mm oder Mikrokapseln mit Durchmessern von etwa 0,0001 bis etwa 0,1 mm vorliegen.

Physikochemisch betrachtet handelt es sich bei Kapseln im Allgemeinen um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen.

Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon. Von besonderer Bedeutung sind Kapseln, deren Hülle von Polyurethanen oder Aminoplasten gebildet wird.

Das Einsatzgebiet von verkapselten Wirkstoffen ist vielfältig. Im Wesentlichen geht es darum, einen Wirkstoff auf ein Substrat aufziehen zu lassen und ihn dann verzögert freizusetzen ("Controlled Release"), so dass eine möglichst lange Wirkung erzielt wird, die für den Verbraucher auch wahrnehmbar ist. Ein typisches Beispiel stellt die Ausrüstung von Textilien dar, bei der es darum geht, ihnen einen langanhaltenden angenehmen Duft zu verleihen. Das Prinzip besteht dabei darin, die Duftstoffe in Kapseln einzuschließen, die Kapseln über den Waschvorgang in den Zwischenräumen der Textilfasern abzulagern und den Wirkstoff nach und nach freizusetzen, nämlich so, wie die Kapseln unter mechanischer Belastung aufbrechen.

### Stand der Technik

Aus dem Stand der Technik sind eine Vielzahl unterschiedlichster Kapseltypen bekannt, wobei exemplarisch auf die folgenden Druckschriften verwiesen werden soll:

Gegenstand der WO 2004 016234 A1 (QUEST) sind Zubereitungen mit verkapselten Wirkstoffen bekannt, wobei diese Kapseln über eine innere Hülle aus Aminoplast und eine äußere Hülle aus einem wasserlöslichen Polymer, wie beispielsweise PVA verfügen.

Die DE 10 2009 012 455 A1 (FOLLMANN) beschreibt Kapseln, bei denen die Kapselwandung durch Kondensation von aromatischen Polyolen mit Dialdehyden erhalten wird.

Weiter ist beispielsweise aus der WO 2015 110568 A1 (FIRMENICH) ein Verfahren zur Herstellung von Aminoplast-Mikrokapseln bekannt, welches sich dadurch auszeichnet, dass das Verhältnis zwischen Aminoplastharz und Parfümöl im Bereich von 0,001 und 0,09 w/w liegt.

Gegenstand der US 2006 063001 A1 (HART) ist ein Verfahren zur Verkapselung von Isothiazolon-Derivaten und anderen wasserlöslichen Bioziden als Anti-Fouling Beschichtungen.

### Aufgabe der Erfindung

Die Aufgabe der vorliegenden Erfindung hat daher darin bestanden, tensidstabile Wirkstoffkapseln, speziell Kapseln mit einem Gehalt an Parfümölen bzw. Riechstoffen, zur Verfügung zu stellen, die über ein verbessertes Leistungsvermögen verfügen und insbesondere nach dem Trocknen den Textilien einen verbesserten, langanhaltenden Duft verleihen. Gleichzeitig sollte die Herstellung der Kapseln technisch möglichst einfach sein und die Mitverwendung - oder intermediäre Bildung - von Formaldehyd ausschließen.

### Beschreibung der Erfindung

Ein erster Gegenstand der Erfindung betrifft formaldehydfreie Wirkstoffkapseln enthaltend oder bestehend aus einem flüssigen Kern, mindestens einer inneren und einer äußeren Hülle, durch folgende Schritte erhalten:
(a) Bereitstellen einer Ölphase enthaltend mindestens einen lipophilen Wirkstoff sowie gegebenenfalls mindestens einem Stabilisator;
(b) Versetzen der Ölphase mit mindestens einem Polyisocyanat;
(c) Bereitstellen einer wässrigen Phase enthaltend mindestens eine polymere Doppelbindungskomponente;
(d) Emulgierung der Ölphase aus Schritt (b) mit der wässrigen Phase aus Schritt (c);
(e) Versetzen der Emulsion aus Schritt (d) mit einem Polyamin,
(f) Versetzen der Emulsion aus Schritt (e) mit mindestens einem aromatischen Alkohol und mindestens einem von Formaldehyd verschiedenen aliphatischen oder aromatischen Aldehyd sowie gegebenenfalls mindestens einem filmbildenden Polymer;
(g) gegebenenfalls Versetzen der Emulsion aus Schritt (f) mit einem Vernetzungsmittel; und
(h) gegebenenfalls Abtrennen und Trocknen der gegebenenfalls vernetzten Kapseln.

Überraschenderweise wurde gefunden, dass die erfindungsgemäßen Kapseln, die über mindestens eine innere und eine äußere Hülle verfügen und dabei von Formaldehyd oder Formaldehyd-abspalten Inhaltsstoffen sind, die oben geschilderten Anforderungen in ausgezeichneter Weise erfüllen. Die Ausführungsform mit einer inneren und einer äußeren Hülle, die aus verschiedenen Materialien bestehen, führt beim Trocknen der so behandelten Textilien dazu, dass die Schichten in unterschiedlicher Weise schrumpfen, was dazu führt, dass die Kapseln sehr leicht brechen und deutlich leichter aktivierbar sind bzw. auch ohne weitere mechanische Belastung nach und nach aufbrechen und den Wirkstoff freigeben. Die Kapseln erweisen sich zudem in tensidischer Umgebung ausreichend lagerstabil.

### Herstellverfahren

Ein zweiter Gegenstand der Erfindung betrifft ein Verfahren zur Herstellung formaldehydfreier Wirkstoffkapseln enthaltend oder bestehend aus einem flüssigen Kern, mindestens einer inneren und einer äußeren Hülle, umfassend die folgenden Schritte:
(a) Bereitstellen einer Ölphase enthaltend mindestens einen lipophilen Wirkstoff sowie gegebenenfalls mindestens einem Stabilisator;
(b) Versetzen der Ölphase mit mindestens einem Polyisocyanat;
(c) Bereitstellen einer wässrigen Phase enthaltend mindestens eine polymere Doppelbindungskomponente;
(d) Emulgierung der Ölphase aus Schritt (b) mit der wässrigen Phase aus Schritt (c);
(e) Versetzen der Emulsion aus Schritt (d) mit einem Polyamin,
(f) Versetzen der Emulsion aus Schritt (e) mit mindestens einem aromatischen Alkohol und mindestens einem von Formaldehyd verschiedenen aliphatischen oder aromatischen Aldehyd sowie gegebenenfalls mindestens einem filmbildenden Polymer;
(g) gegebenenfalls Versetzen der Emulsion aus Schritt (f) mit einem Vernetzungsmittel; und
(h) gegebenenfalls Abtrennen und Trocknen der gegebenenfalls vernetzten Kapseln.

Das Verfahren teilt sich in zwei Phasen auf: im ersten Abschnitt (Schritte a bis e) wird der Wirkstoff verkapselt, wobei die innere Hülle entsteht, im zweiten Abschnitt wird diese intermediäre Kapsel von einer zweiten Hülle überzogen und diese gegebenenfalls noch vernetzt (Schritte f bis g).

Dabei findet zunächst der Einschluss der Wirkstoffe aus einer Emulsion durch Reaktion eines Polyisocyanats mit einem Polyamin statt, wobei eine Polyurethanhülle entsteht. Auf die erste Polyurethanhülle wird dann eine zweite Aminoplasthülle aufgebaut und gegebenenfalls durch Vernetzung ausgehärtet. Dabei ist es ebenfalls möglich zuerst die äußere Hülle aus Aminoplast zu Bilden und anschließend die Polyurethan Hülle von innen auf die bestehende äußere Hülle abzulagern; hierzu bedarf es nur der Umkehrung der Reaktionsschritte.

### Wirkstoffe

Die Auswahl der zu verkapselnden Rohstoffe ist an sich unkritisch und wird ausschließlich durch die gewünschte Anwendung bestimmt. Limitierend ist allein, dass diese entweder als Öl vorliegen oder hinreichen öllöslich, also lipophil sein müssen, um sich in einer Ölphase lösen zu lassen.

Neben Aromen für den Nahrungsmittelbereich kommen als Wirkstoffe insbesondere Parfümöle sowie öllösliche Riechstoffe in Frage, wie sie nachfolgend beispielhaft aufgeführt sind:

**Extrakte aus natürlichen Rohstoffen,** wie Etherische Öle, Concretes, Absolüs, Resine, Resinoide, Balsame, Tinkturen wie z. B. Ambratinktur; Amyrisöl; Angelicasamenöl; Angelicawurzelöl; Anisöl; Baldrianöl; Basilikumöl; Baummoos-Absolü; Bayöl; Beifussöl; Benzöresin; Bergamotteöl; Bienenwachs-Absolü; Birkenteeröl; Bittermandelöl; Bohnenkrautöl; Buccoblätteröl; Cabreuvaöl; Cadeöl; Calmusöl; Campheröl; Canangaöl; Cardamomenöl; Cascarillaöl; Cassiaöl; Cassie-Absolü; Castoreum-Absolü; Cedernblätteröl; Cedernholzöl; Cistusöl; Citronellöl; Citronenöl; Copaivabalsam; Copaivabalsamöl; Corianderöl; Costuswurzelöl; Cuminöl; Cypressenöl; Davanaöl; Dillkrautöl; Dillsamenöl; Eau de brouts-Absolü; Eichenmoos-Absolü; Elemiöl; Estragonöl; Eucalyptus-Citriodora-öl; Eucalyptusöl; Fenchelöl; Fichtennadelöl; Galbanumöl; Galbanumresin; Geraniumöl; Grapefruitöl; Guajakholzöl; Gurjunbalsam; Gurjunbalsamöl, Helichrysum-Absolü; Helichrysumöl; Ingweröl; Iriswurzel-Absolü; Iriswurzelöl; Jasmin-Absolü; Kalmusöl; Kamillenöl blau; Kamillenöl römisch; Karottensamenöl; Kaskarillaöl; Kiefernadelöl; Krauseminzöl; Kümmelöl; Labdanumöl; Labdanum-Absolü; Labdanumresin; Lavandin-Absolü; Lavandinöl; Lavendel-Absolü; Lavendelöl; Lemongrasöl; Liebstocköl; Limetteöl destilliert; Limetteöl gepresst; Linalööl; Litsea-Cubeba-öl; Lorbeerblätteröl; Macisöl; Majoranöl; Mandarinenöl; Massoirindenöl; Mimosa-Absolü; Moschuskörneröl; Moschustinktur; Muskateller-Salbei-öl; Muskatnussöl; Myrrhen-Absolü; Myrrhenöl; Myrtenöl; Nelkenblätteröl; Nelkenblütenöl; Neroliöl; Olibanum-Absolü; Olibanumöl; Opopanaxöl; Orangenblüten-Absolü; Orangenöl; Origanumöl; Palmarosaöl; Patchouliöl; Perillaöl; Perubalsamöl; Petersilienblätteröl; Petersiliensamenöl; Petitgrainöl; Pfefferminzöl; Pfefferöl; Pimentöl; Pineöl; Poleyöl; Rosen-Absolü; Rosenholzöl; Rosenöl; Rosmarinöl; Salbeiöl dalmatinisch; Salbeiöl spanisch; Sandelholzöl; Selleriesamenöl; Spiklavendelöl; Sternanisöl; Styraxöl; Tagetesöl; Tannennadelöl; Tea-Tree-öl; Terpentinöl; Thymianöl; Tolubalsam; Tonka-Absolü; Tuberosen-Absolü; Vanilleextrakt; Veilchenblätter-Absolü; Verbenaöl; Vetiveröl; Wacholderbeeröl; Weinhefenöl; Wermutöl; Wintergrünöl; Ylangöl; Ysopöl; Zibet-Absolü; Zimtblätteröl; Zimtrindenöl; sowie Fraktionen davon bzw. daraus isolierte Inhaltsstoffe;

Einzelne Riechstoffe aus einer oder mehreren der folgenden Gruppen:

**Kohlenwasserstoffe,** wie z. B. 3-Caren; a-Pinen; beta -Pinen; alpha-Terpinen; gamma-Terpinen; p-Cymol; Bisabolen; Camphen; Caryophyllen; Cedren; Farnesen; Limonen; Longifolen; Myrcen; Ocimen; Valencen; (*E,Z*)-1,3,5-Undecatrien;

**Aliphatische Alkohole,** wie z. B. Hexanol; Octanol; 3-Octanol; 2,6-Dimethylheptanol; 2-Methylheptanol, 2-Methyloctanol; (*E*)-2-Hexenol; (*E*)- und (*Z*)-3-Hexenol; 1-Octen-3-ol; Gemisch von 3,4,5,6,6-Pentamethyl-3/4-hepten-2-ol und 3,5,6,6-Tetramethyl-4-methyleneheptan-2-ol; (*E*,*Z*)-2,6-Nonadienol; 3,7-Dimethyl-7-methoxyoctan-2-ol; 9-Decenol; 10-Undecenol; 4-Methyl-3-decen-5-ol;

**Aliphatische Aldehyde und deren Acetale,** wie z. B. Hexanal; Heptanal; Octanal; Nonanal; Decanal; Undecanal; Dodecanal; Tridecanal; 2-Methyloctanal; 2-Methylnonanal; (*E*)-2-Hexenal; (*Z*)-4-Heptenal; 2,6-Dimethyl-5-heptenal; 10-Undecenal; (*E*)-4-Decenal; 2-Dodecenal; 2,6,10-Trimethyl-5,9-undecadienal; Heptanal-diethylacetal; 1,1-Dimethoxy-2,2,5-trimethyl-4-hexen; Citronellyloxyacetaldehyd;

**Aliphatische Ketone und deren Oxime,** wie z. B. 2-Heptanon; 2-Octanon; 3-Octanon; 2-Nonanon; 5-Methyl-3-heptanon; 5-Methyl-3-heptanonoxim; 2,4,4,7-Tetramethyl-6-octen-3-on;

**Aliphatische schwefelhaltige Verbindungen,** wie z. B. 3-Methylthiohexanol; 3-Methylthiohexylacetat; 3-Mercaptohexanol; 3-Mercaptohexylacetat; 3-Mercaptohexylbutyrat; 3-Acetylthiohexylacetat; 1-Menthen-8-thiol;

**Aliphatische Nitrile,** wie z. B. 2-Nonensäurenitril; 2-Tridecensäurenitril; 2,12-Tridecensäurenitril; 3,7-Dimethyl-2,6-octadiensäurenitril; 3,7-Dimethyl-6-octensäurenitril;

**Aliphatische Carbonsäuren und deren Ester,** wie z. B. (*E*)- und (*Z*)-3-Hexenylformiat; Ethylacetoacetat; Isoamylacetat; Hexylacetat; 3,5,5-Trimethylhexylacetat; 3-Methyl-2-butenylacetat; (*E*)-2-Hexenylacetat; (*E*)- und (*Z*)-3-Hexenylacetat; Octylacetat; 3-Octylacetat; 1-Octen-3-ylacetat; Ethylbutyrat; Butylbutyrat; Isoamylbutyrat; Hexylbutyrat; (*E*)- und (Z)-3-Hexenylisobutyrat; Hexylcrotonat; Ethylisovalerianat; Ethyl-2-methylpentanoat; Ethylhexanoat; Allylhexanoat; Ethylheptanoat; Allylheptanoat; Ethyloctanoat; Ethyl-(*E,Z*)-2,4-decadienoat; Methyl-2-octinat; Methyl-2-noninat; Allyl-2-isoamyloxyacetat; Methyl-3,7-dimethyl-2,6-octadienoat;

**Acyclische Terpenalkohole,** wie z. B. Citronellol; Geraniol; Nerol; Linalool; Lavadulol; Nerolidol; Farnesol; Tetrahydrolinalool; Tetrahydrogeraniol; 2,6-Dimethyl-7-octen-2-ol; 2,6-Dimethyloctan-2-ol; 2-Methyl-6-methylen-7-octen-2-ol; 2,6-Dimethyl-5,7-octadien-2-ol; 2,6-Dimethyl-3,5-octadien-2-ol; 3,7-Dimethyl-4,6-octadien-3-ol; 3,7-Dimethyl-1,5,7-octatrien-3-ol; 2,6-Dimethyl-2,5,7-octatrien-I-ol; sowie deren Formiate, Acetate, Propionate, Isobutyrate, Butyrate, Isovalerianate, Pentanoate, Hexanoate, Crotonate, Tiglinate, 3-Methyl-2-butenoate;

**Acyclische Terpenaldehyde und -ketone,** wie z. B. Geranial; Neral; Citronellal; 7-Hydroxy-3,7-dimethyloctanal; 7-Methoxy-3,7-dimethyloctanal; 2,6,10-Trimethyl-9-undecenal; Geranylaceton; sowie die Dimethyl- und Diethylacetale von Geranial, Neral, 7-Hydroxy-3,7-dimethyloctanal;

**Cyclische Terpenalkohole,** wie z. B. Menthol; Isopulegol; a-Terpineol; Terpinenol-4; Menthan-8-ol; Menthan-1-ol; Menthan-7-ol; Borneol; Isoborneol; Linalooloxid; Nopol; Cedrol; Ambrinol; Vetiverol; Guajol; sowie deren Formiate, Acetate, Propionate, Isobutyrate, Butyrate, Isovalerianate, Pentanoate, Hexanoate, Crotonate, Tiglinate, 3-Methyl-2-butenoate;

**Cyclische Terpenaldehyde und -ketone,** wie z. B. Menthon; Isomenthon; 8-Mercaptomenthan-3-on; Carvon; Campher; Fenchon; a-lonon; beta -lonon; a-n-Methylionon; beta -n-Methylionon; a-Isomethylionon; beta -Isomethylionon; a-Iron; a-Damascon; beta-Damascon; beta -Damascenon; ?-Damascon; d-Damascon; 1-(2,4,4-Trimethyl-2-cyclohexen-1-yl)-2-buten-1-on; 1,3,4,6,7,8a-Hexahydro-1,1,5,5-tetramethyl-2H-2,4a-methanonaphthalen-8(5H)-on; Nootkaton; Dihydronootkaton; a-Sinensal; beta -Sinensal; acetyliertes Cedernholzöl (Methylcedrylketon);

**Cyclische Alkohole,** wie z. B. 4-*tert*-Butylcyclohexanol; 3,3,5-Trimethylcyclohexanol; 3-Isocamphylcyclohexanol; 2,6,9-Trimethyl-(*Z*2,*Z*5,*E*9)-cyclododecatrien-1-ol; 2-Isobutyl-4-methyltetrahydro-2*H*-pyran-4-ol; sowie aus der Gruppe der cycloaliphatischen Alkohole wie z. B. a,3,3-Trimethyl-cyclohexylmethanol; 2-Methyl-4-(2,2,3-trimethyl-3-cyclopent-1-yl)butanol; 2-Methyl-4-(2,2,3-trimethyl-3-cyclopent-1-yl)-2-buten-1-ol; 2-Ethyl-4-(2,2,3-trimethyl-3-cyclopent-1-yl)-2-buten-l-ol; 3-Methyl-5-(2,2,3-trimethyl-3-cyclopent-1-yl)-pentan-2-ol; 3-Methyl-5-(2,2,3-trimethyl-3-cyclopent-1-yl)-4-penten-2-ol; 3,3-Dimethyl-5-(2,2,3-trimethyl-3-cyclopent-1-yl)-4-penten-2-ol; 1-(2,2,6-Trimethylcyclohexyl)pentan-3-ol; 1-(2,2,6-Trimethylcyclohexyl)hexan-3-ol;

**Cyclische und cycloaliphatische Ether,** wie z. B. Cineol; Cedrylmethylether; Cyclododecylmethylether; (Ethoxymethoxy)cyclododecan; a-Cedrenepoxid; 3a,6,6,9a-Tetramethyldodecahydronaphtho[2,1-b]furan; 3a-Ethyl-6,6,9a-trimethyl-dodecahydronaph-tho[2,1-b]furan; 1,5,9-Trimethyl-13-oxabicyclo[10.1.0]trideca-4,8-dien; Rosenoxid; 2-(2,4-Dimethyl-3-cyclohexen-1-yl)-5-methyl-5-(1-methylpropyl)-1,3-dioxan;

**Cyclische Ketone,** wie z. B. 4-*tert*-Butylcyclohexanon; 2,2,5-Trimethyl-5-pentylcyclopentanon; 2-Heptylcyclopentanon; 2-Pentylcyclopentanon; 2-Hydroxy-3-methyl-2-cyclopenten-1-on; 3-Methyl-cis-2-penten-1-yl-2-cyclopenten-1-on; 3-Methyl-2-pentyl-2-cyclopenten-1-on; 3-Methyl-4-cyclopentadecenon; 3-Methyl-5-cyclopentadecenon; 3-Methylcyclopentadecanon; 4-(1-Ethoxyvinyl)-3,3,5,5-tetramethylcyclohexanon; 4*-tert-*Pentylcyclohexanon; 5-Cyclohexadecen-1-on; 6,7-Dihydro-1,1,2,3,3-pentamethyl-4(5*H*)-indanon; 9-Cycloheptadecen-1-on; Cyclopentadecanon; Cyclohexadecanon;

**Cycloaliphatische Aldehyde,** wie z. B. 2,4-Dimethyl-3-cyclohexencarbaldehyd; 2-Methyl-4-(2,2,6-trimethyl-cyclohexen-1-yl)-2-butenal; 4-(4-Hydroxy-4-methylpentyl)-3-cyclohexencarbaldehyd; 4-(4-Methyl-3-penten-1-yl)-3-cyclohexencarbaldehyd;

**Cycloaliphatische Ketone,** wie z. B. 1-(3,3-Dimethylcyclohexyl)-4-penten-1-on; 1-(5,5-Dimethyl-1-cyclohexen-1-yl)-4-penten-1-on; 2,3,8,8-Tetramethyl-1,2,3,4,5,6,7,8-octa-hydro-2-naphtalenylmethylketon; Methyl-2,6,10-trimethyl-2,5,9-cyclododecatrienyl-keton; *tert*-Butyl-(2,4-dimethyl-3-cyclohexen-1-yl)keton;

**Ester cyclischer Alkohole,** wie z. B. 2-*tert*-Butylcyclohexylacetat; 4-*tert*-Butylcyclohexylacetat; 2-*tert*-Pentylcyclohexylacetat; 4-*tert*-Pentylcyclohexylacetat; Decahydro-2-naphthylacetat; 3-Pentyltetrahydro-2*H*-pyran-4-ylacetat; Decahydro-2,5,5,8a-tetramethyl-2-naphthylacetat; 4,7-Methano-3a,4,5,6,7,7a-hexahydro-5- bzw. -6-indenylacetat; 4,7-Methano-3a,4,5,6,7,7a-hexahydro-5- bzw. -6-indenylpropionat; 4,7-Methano-3a,4,5,6,7,7a-hexahydro-5- bzw. -6-indenylisobutyrat; 4,7-Methanooctahydro-5- bzw. -6-indenylacetat;

**Ester cycloaliphatischer Carbonsäuren,** wie z. B. Allyl-3-cyclohexylpropionat; Allylcyclohexyloxyacetat; Methyldihydrojasmonat; Methyljasmonat; Methyl-2-hexyl-3-oxocyclopentancarboxylat; Ethyl-2-ethyl-6,6-dimethyl-2-cyclohexencarboxylat; Ethyl-2,3,6,6-tetramethyl-2-cyclohexencarboxylat; Ethyl-2-methyl-1,3-dioxolan-2-acetat;

**Aromatische Kohlenwasserstoffe,** wie z. B. Styrol und Diphenylmethan;

**Araliphatische Alkohole,** wie z. B. Benzylalkohol; 1-Phenylethylalkohol; 2-Phenylethylalkohol; 3-Phenylpropanol; 2-Phenylpropanol; 2-Phenoxyethanol; 2,2-Dimethyl-3-phenylpropanol; 2,2-Dimethyl-3-(3-methylphenyl)propanol; 1,1-Dimethyl-2-phenylethylalkohol; 1,1-Dimethyl-3-phenylpropanol; 1-Ethyl-1-methyl-3-phenylpropanol; 2-Methyl-5-phenylpentanol; 3-Methyl-5-phenylpentanol; 3-Phenyl-2-propen-1-ol; 4-Methoxybenzylalkohol; 1-(4-Isopropylphenyl)ethanol;

**Ester von araliphatischen Alkoholen und aliphatischen Carbonsäuren,** wie z. B. Benzylacetat; Benzylpropionat; Benzylisobutyrat; Benzylisovalerianat; 2-Phenylethylacetat; 2-Phenylethylpropionat; 2-Phenylethylisobutyrat; 2-Phenylethylisovalerianat; 1-Phenylethylacetat; a-Trichlormethylbenzylacetat; a,a-Dimethylphenylethylacetat; a,a-Dimethyl-phenylethylbutyrat; Cinnamylacetat; 2-Phenoxyethylisobutyrat; 4-Methoxybenzylacetat;

**Araliphatischen Ether,** wie z. B. 2-Phenylethylmethylether; 2-Phenylethylisoamylether; 2-Phenylethyl-1-ethoxyethylether; Phenylacetaldehyddimethylacetal; Phenylacetaldehyd-diethylacetal; Hydratropaaldehyd-dimethylacetal; Phenylacetaldehyd-glycerinacetal; 2,4,6-Trimethyl-4-phenyl-1,3-dioxane; 4,4a,5,9b-Tetrahydroindeno[1,2-d]-m-dioxin; 4,4a,5,9b-Tetrahydro-2,4-dimethylindeno[1,2-d]-m-dioxin;

**Aromatische und araliphatische Aldehyde,** wie z. B. Benzaldehyd; Phenylacetaldehyd; 3-Phenylpropanal; Hydratropaaldehyd; 4-Methylbenzaldehyd; 4-Methylphenylacetaldehyd; 3-(4-Ethylphenyl)-2,2-dimethylpropanal; 2-Methyl-3-(4-isopropylphenyl)-propanal; 2-Methyl-3-(4-*tert*-butylphenyl)propanal; 3-(4-*tert*-Butylphenyl)propanal; Zimtaldehyd; a-Butylzimtaldehyd; a-Amylzimtaldehyd; a-Hexylzimtaldehyd; 3-Methyl-5-phenylpentanal; 4-Methoxybenzaldehyd; 4-Hydroxy-3-methoxybenzaldehyd; 4-Hydroxy-3-ethoxybenzaldehyd; 3,4-Methylendioxybenzaldehyd; 3,4-Dimethoxybenzaldehyd; 2-Methyl-3-(4-methoxyphenyl)propanal; 2-Methyl-3-(4-methylendioxyphenyl)propanal;

**Aromatische und araliphatische Ketone,** wie z. B. Acetophenon; 4-Methylacetophenon; 4-Methoxyacetophenon; 4-*tert*-Butyl-2,6-dimethylacetophenon; 4-Phenyl-2-butanon; 4-(4-Hydroxyphenyl)-2-butanon; 1-(2-Naphthalenyl)ethanon; Benzophenon; 1,1,2,3,3,6-Hexamethyl-5-indanylmethylketon; 6-*tert*-Butyl-1,1-dimethyl-4-indanylmethyl-keton; 1-[2,3-dihydro-1,1,2,6-tetramethyl-3-(1-methylethyl)-1H-5-indenyl]ethanon; 5',6',7',8'-Tetrahydro-3',5',5',6',8',8'-hexamethyl-2-acetonaphthon;

**Aromatische und araliphatische Carbonsäuren und deren Ester,** wie z. B. Benzoesäure; Phenylessigsäure; Methylbenzoat; Ethylbenzoat; Hexylbenzoat; Benzylbenzoat; Methylphenylacetat; Ethylphenylacetat; Geranylphenylacetat; Phenylethyl-phenylacetat; Methylcinnamat; Ethylcinnamat; Benzylcinnamat; Phenylethylcinnamat; Cinnamylcinnamat; Allylphenoxyacetat; Methylsalicylat; Isoamylsalicylat; Hexylsalicylat; Cyclohexylsalicylat; *cis-*3-Hexenylsalicylat; Benzylsalicylat; Phenylethylsalicylat; Methyl-2,4-dihydroxy-3,6-dimethylbenzoat; Ethyl-3-phenylglycidat; Ethyl-3-methyl-3-phenylglycidat;

**Stickstoffhaltige aromatische Verbindungen,** wie z. B. 2,4,6-Trinitro-1,3-dimethyl-5-*tert*-butylbenzol; 3,5-Dinitro-2,6-dimethyl-4-*tert*-butylacetophenon; Zimtsäurenitril; 5-Phenyl-3-methyl-2-pentensäurenitril; 5-Phenyl-3-methylpentansäurenitril; Methylanthranilat; Methy-N-methylanthranilat; Schiff'sche Basen von Methylanthranilat mit 7-Hydroxy-3,7-dimethyloctanal, 2-Methyl-3-(4-*tert*-butylphenyl)propanal oder 2,4-Dimethyl-3-cyclohexencarbaldehyd; 6-Isopropylchinolin; 6-Isobutylchinolin; 6-*sec*-Butylchinolin; Indol; Skatol; 2-Methoxy-3-isopropylpyrazin; 2-Isobutyl-3-methoxypyrazin; 4-(4,8-Dimethyl-3,7-nonadienyl)-pyridin;

**Phenole, Phenylether und Phenylester,** wie z. B. Estragol; Anethol; Eugenol; Eugenylmethylether; Isöugenol; Isöugenylmethylether; Thymol; Carvacrol; Diphenylether; beta-Naphthylmethylether; beta -Naphthylethylether; beta -Naphthylisobutylether; 1,4-Dimethoxybenzol; Eugenylacetat; 2-Methoxy-4-methylphenol; 2-Ethoxy-5-(1-propenyl)phenol; p-Kresylphenylacetat;

aus der Gruppe der heterocyclischen Verbindungen wie z. B. 2,5-Dimethyl-4-hydroxy-2H-furan-3-on; 2-Ethyl-4-hydroxy-5-methyl-2H-furan-3-on; 3-Hydroxy-2-methyl-4H-pyran-4-on; 2-Ethyl-3-hydroxy-4H-pyran-4-on;

**Lactone,** wie z. B. 1,4-Octanolid; 3-Methyl-1,4-octanolid; 1,4-Nonanolid; 1,4-Decanolid; 8-Decen-1,4-olid; 1,4-Undecanolid; 1,4-Dodecanolid; 1,5-Decanolid; 1,5-Dodecanolid; 1,15-Pentadecanolid; cis- und trans-11-Pentadecen-1,15-olid; cis- und trans-12-Pentadecen-1,15-olid; 1,16-Hexadecanolid; 9-Hexadecen-1,16-olid; 10-Oxa-1,16-hexadecanolid; 11-Oxa-1,16-hexadecanolid; 12-Oxa-1,16-hexadecanolid; Ethylen-1,12-dodecandioat; Ethylen-1,13-tridecandioat; Cumarin; 2,3-Dihydrocumarin; Octahydrocumarin.

### Polyisocyanate

Als Polyisocyanate können zur Herstellung erfindungsgemäßer Kapseln die verschiedensten aliphatischen, aromatischen und aromatisch-aliphatischen zwei- und höherfunktionellen Isocyanate eingesetzt werden, insbesondere solche, die mindestens zwei Isocyanatgruppen aufweisen und zur Herstellung von Kapseln und Mikrokapseln bereits grundsätzlich bekannt sind. Vorzugsweise werden aliphatische Polyisocyanate eingesetzt. Besonders bevorzugt eingesetzt werden: Hexamethylendiisocyanat, Isophorondiisocyanat und/ oder freie Isocyanatgruppen aufweisende Derivate des Hexamethylendiisocyanats und des Isophorondiisocyanats, die Biuret-, Isocyanurat-, Uretdion- und/oder Oxadiazintriongruppen enthalten. Es können auch Gemische verschiedener Polyisocyanate eingesetzt werden. Einige einsetzbare Polyisocyanate sind z. B. beschrieben in EP 0227 62 A1**,** EP 0164 666 A1 und EP-0016378 A1**.**

Als Polyisocyanate mit Isocyanuratanteil werden vorzugsweise aliphatische und cycloaliphatische Polyisocyanate, die wenigstens 30 Gew.-& einer Isocyanat-aufweisenden Isocyanuratverbindung enthalten. Als Isocyanuratgruppen-aufweisende Polyisocyanate kommen insbesondere trimerisierte Diisocyanate der Formel (I) in Frage worin

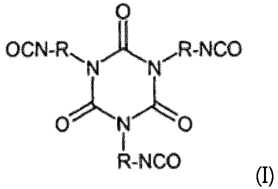

R für einen zweiwertigen aliphatischen oder cycloaliphatischen Rest steht, insbesondere fuer einen C1-C10-aliphatischen Rest oder für einen C6-C10-cycloaliphatischen Rest, vorzugsweise (CH2)6 bedeutet, als auch deren Umsetzungsprodukte mit weiteren 2n äquivalenten Diisocyanaten der Formel OCN-R-NCO unter Isocyanuratbildung, im Folgenden als oligomere Polyisocyanate mit Isocyanuratgruppen bezeichnet. Bevorzugt bedeutet n eine Zahl von 0 bis 10, insbesondere von 0 bis 4. Bevorzugt steht R für (CH₂)₆. Weiter bevorzugt besitzen mehr als 50 Gew.-% aller Polyisocyanate, insbesondere mehr als 80 Gew.-%, besonders bevorzugt mehr als 90 Gew.-%, ganz besonders bevorzugt sogar mehr als 95 Gew.-% aller Polyisocyanate Isocyuanuratgruppen.

In einer weiteren bevorzugten Ausführungsform beträgt der Anteil an Isocyanurat der Formel I, insbesondere worin R = (CH₂)₆ mehr als 30 Gew.- percent, insbesondere mehr als 45 Gew.- percent, bezogen auf Polyisocyanat. Der Anteil der oligomeren Polyisocyanate, insbesondere solche auf Basis von Formel I, worin R = (CH₂)₆ mit Isocyanuratgruppen, bezogen auf Polyisocyanurat, beträgt vorzugsweise mehr als 20 Gew,-%, insbesondere mehr als 30 Gew.-%. Die Isocyanurat-Anteile, d. h Anteile von Trimerisaten und Oligomerisaten des Polyisocyanats, lassen sich im Allgemeinen mit Gel-Permeations-Chromatographie (GPC) bestimmen.

Bei den Uretdiongruppen aufweisenden Polyisocyanaten handelt es sich vorzugsweise um Oligomere des Hexamethylendiisocyanats, mit Uretdionstruktur. Besonders vorteilhaft sind Isocyanate, die hohe Anteile der Verbindung folgender Struktur aufweisen:

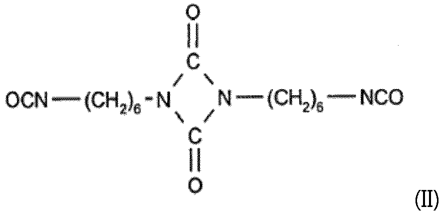

Der Anteil der Isocyanate mit der Struktur (II) kann z. B. mindestens 70 Gew.-%, vorzugsweise mindestens 75 Gew.-% des eingesetzten Isocyanats ausmachen und kann beispielsweise mit der Gel-Permeations-Chromatographie bestimmt werden.

Bei der technischen Herstellung des Isocyanats der Struktur (II) entstehen i. a. auch höhermolekulare Anteile von Additionsprodukten des Hexamethylendiisocyanats oder Verbindungen mit unterschiedlicher NCO-Verknüpfung. Somit können z. B. in untergeordnetem Masse, z. B. höchstens bis zu 30 Gew.-%, vorzugsweise höchstens bis zu 25 Gew.-% auch Verbindungen der Formel (I) mit R = (CH₂)₆ und/oder der Verbindung der Formel (III) 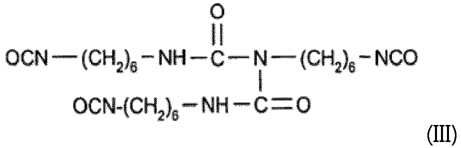 in dem erfindungsgemäß einzusetzenden Isocyanat enthalten sein. Dies ist häufig bei Einsatz handelsüblicher Produkte der Fall.

Diese technischen Uretdion-Isocyanate, die überwiegend das Uretdion des Hexamethylendiisocyanats (Struktur (II)) enthalten, und deren Gemische mit anderen aliphatischen und aromatischen Isocyanaten, lassen sich überraschenderweise bei Vernetzung mit Guanidinverbindungen zu hochwertigeren Kapseln besser verarbeiten als es beim Einsatz von Isocyanaten mit überwiegenden Strukturanteilen von (I) und/oder (III) der Fall ist.

Uretdiongruppen aufweisende Polyisocyanate oder deren Gemische mit anderen aliphatischen und/oder aromatischen Isocyanaten können z. B. in einer Menge von 1 bis 25 Gew.- percent, bevorzugt 3 bis 15 Gew.- percent, besonders bevorzugt 5 bis 10 Gew.- percent, bezogen auf die Gesamtmenge der zu verkapselnden Ölphase, eingesetzt werden.

Bei aliphatischen Biuretgruppen aufweisenden Polyisocyanaten kann es sich z. B. um Oligomere des Hexamethylendiisocyanats mit Biuretstruktur handeln. Besonders vorteilhaft sind Isocyanate, die hohe Anteile insbesondere mehr als 70 Gew.- percent von Verbindungen der Formel (IV) enthalten: 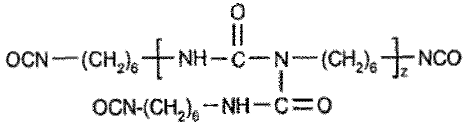 in der z für eine ganze Zahl von 1 bis 10 steht.

Bei der technischen Herstellung von Isocyanaten der Formel (III) entstehen u. a. auch höhermolekulare Anteile von Additionsprodukten des Hexamethylendiisocyanats oder Verbindungen mit unterschiedlicher NCO-Verknüpfung. Somit können in untergeordnetem Masse, z. B. bis zu 20 Gew.- percent, auch Verbindungen der Formeln 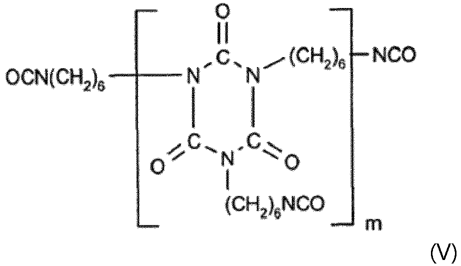 und/oder 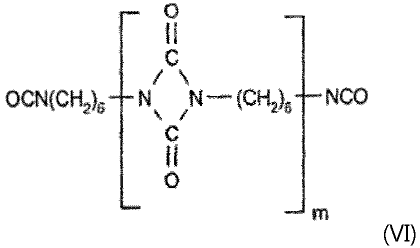 in denen m jeweils für eine ganze Zahl im Bereich von 1 bis 10 steht, in den erfindungsgemäß einzusetzenden Mischungen enthalten ist, wie es häufig bei Einsatz handelsüblicher Produkte der Fall ist.

### Polyamine

Polyamine, die mit den Polyisocyanaten unter Urethanbildung abreagieren, weisen vorzugsweise mindestens zwei Aminogruppen auf. Besonders bevorzugt sind aliphatische und/oder cycloaliphatische Amine, die wenigstens zwei primäre und/oder sekundäre Aminogruppen besitzen und/oder ein Molekulargewicht von weniger als 200 g/mol besitzen. Als besonders bevorzugte Amine sind zu nennen: Ethylendiamin, Diethylentriamin, Triethylentetramin, Tetraethylenpentamin, Aminoethylpiperazin, Propylendiamin, N-Methyldipropylentriamin, Bis-(3-aminopropyl)amin, Hexamethylendiamin, Melamin sowie 2,5-Diamino-2,5-dimethylhexan.

Als besonders geeignet haben sich Guanidinverbindungen erwiesen, beispielsweise solche der Formel (VII)

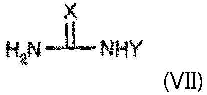

In der X für HN=, H₂N-CO-N= oder H₂N-CNH-N= und Y für H-, NC-, H₂N-, HO-, H₂N-CO- oder H₂N-CNH- stehen, in Frage sowie deren Salze mit Säuren. Beispielsweise kann es sich bei den Salzen um Salze von Kohlensäure, Salpetersäure, Schwefelsäure, Salzsäure, Kieselsäure, Phosphorsäure, Ameisensäure und/oder Essigsäure handeln. Der Einsatz von Salzen von Guanidinverbindungen der Formel (I) kann in Kombination mit anorganischen Basen erfolgen, um in situ aus den Salzen die freien Guanidinverbindungen der Formel (I) zu erhalten. Als anorganische Basen für diesen Zweck kommen z. B. Alkali- und/oder Erdalkalihydroxide und/oder Erdalkalioxide in Frage. Bevorzugt sind wässrige Lösungen oder Aufschlämmungen dieser Basen, insbesondere wässrige Natronlauge, wässrige Kalilauge und wässrige Lösungen oder Aufschlämmungen von Kalziumhydroxid. Es können auch Kombinationen mehrerer Basen angewendet werden.

Häufig ist es vorteilhaft, die Guanidinverbindungen der Formel (VII) als Salze einzusetzen, weil sie in dieser Form im Handel erhältlich und die freien Guanidinverbindungen zum Teil in Wasser schwer löslich oder nicht lagerstabil sind. Wenn man anorganische Basen einsetzt, können diese in stöchiometrischen, unterstöchiometrischen und überstöchiometrischen Mengen, bezogen auf Salze von Guanidinverbindungen, verwendet werden. Vorzugsweise setzt man 10 bis 100 Äquivalente anorganische Basen (bezogen auf Salze der Guanidinverbindungen) ein. Vorzugsweise wird Guanidin oder werden Salze von Guanidin mit Kohlensäure, Salpetersäure, Schwefelsäure, Salzsäure, Kieselsäure, Phosphorsäure, Ameisensäure und/oder Essigsäure eingesetzt.

Besonders vorteilhaft ist es, Salze von Guanidinverbindungen mit schwachen Säuren einzusetzen. Diese befinden sich in wässriger Lösung in Folge Hydrolyse im Gleichgewicht mit der entsprechenden freien Guanidinverbindung. Die freie Guanidinverbindung wird während des Verkapselungsprozesses verbraucht und bildet sich gemäß dem Massenwirkungsgesetz laufend nach. Diesen Vorteil zeigt in besonderer Weise das Guanidincarbonat (VIII).

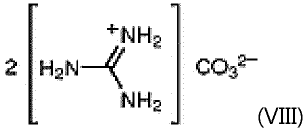

Beim Einsatz von Salzen von Guanidinverbindungen mit schwachen Säuren ist ein Zusatz anorganischer Basen zur Freisetzung der freien Guanidinverbindungen nicht erforderlich.

Die für die vorliegende Erfindung in Frage kommenden Guanidinverbindungen der Formel (VII) können auch durch Ionenaustausch aus ihren wasserlöslichen Salzen nach dem Stand der Technik mit Hilfe handelsüblicher basischer Ionenaustauscher hergestellt werden. Man kann das Eluat aus dem Ionenaustauscher direkt zur Kapselwandbildung heranziehen, indem man es mit der O/W-Emulsion vermischt. Auch hier ist Guanidincarbonat bevorzugt.

Vorzugsweise werden die Polyisocyanate und die Polyamine in einem molaren Verhältnis eingesetzt, bei dem auf jede Isocyanatgruppe etwa 0,8 bis 2 und insbesondere etwa 1 bis etwa 1,5 Aminogruppen entfallen.

### Filmbildende Polymere

In einer bevorzugten Ausführungsform der vorliegenden Erfindung können im Rahmen des Herstellungsverfahrens auch filmbildende Polymere mitverwendet werden. Diese ziehen auf die innere bzw. äußere Hülle auf und bilden einen weiteren Überzug. Für diesen Zweck eignen sich insbesondere Polyvinylalkohole. Die Einsatzmenge kann etwa 10 bis etwa 100 Gew.-%, vorzugsweise etwa 20 bis etwa 70 Gew.-% und insbesondere etwa 40 bis etwa 50 Gew.-% bezogen auf die Gesamtmenge an Polyisocyanaten und Polyaminen betragen.

### Aromatische Alkohole

Als aromatische Alkohole, die als eine der beiden Komponenten für den Aufbau der äußeren Aminoplasthülle dienen, sind im Rahmen der vorliegenden Erfindung Aryloxyalkanole, Arylalkanole und Oligoalkanolarylether bevorzugt. Ebenfalls bevorzugt sind aromatische Verbindungen, bei denen mindestens eine freie Hydroxygruppe, besonders bevorzugt mindestens zwei freie Hydroxy-Gruppen unmittelbar aromatisch gebunden sind, wobei es besonders bevorzugt ist, wenn mindestens zwei freie Hydroxy-Gruppen unmittelbar an einen aromatischen Ring gebunden sind und ganz besonders bevorzugt in meta-Stellung zueinander angeordnet sind. Es ist bevorzugt, dass die aromatischen Alkohole ausgewählt sind aus den Phenolen, den Kresolen (o-, m- und p-Kresol), den Naphtholen (alpha- und beta-Naphthol) und Thymol, sowie aus den Ethylphenolen, Propylphenolen, Fluorphenolen und Methoxyphenolen.

Erfindungsgemäß bevorzugte aromatische Alkohole sind außerdem solche, die bei der Herstellung von Polycarbonat-Kunststoffen (z. B. für Compact Discs, Plastikschüsseln, Babyfläschchen) und Epoxydharzlacken (z. B. für Beschichtungen von Konservendosen und Folienverpackungen) verwendet werden, insbesondere 2,2-Bis-(4-hydroxyphenyl)-propan (Bisphenol A).

Ganz besonders bevorzugt ist es, wenn der erfindungsgemäß vorliegende aromatische Alkohol ausgewählt ist aus den Phenolen mit zwei oder mehr Hydroxygruppen, vorzugsweise aus Brenzcatechin, Resorcin, Hydrochinon und 1,4-Naphthohydrochinon, Phloroglucin, Pyrogallol, Hydroxyhydrochinon, wobei insbesondere Resorcin und/oder Phloroglucin als aromatische Alkohole bevorzugt sind.

]In einer weiteren Ausführungsform gelangt man zu den erfindungsgemäßen Mikrokapseln, indem der aromatische Alkohol als Ether eingesetzt wird, wobei der Ether in einer bevorzugten Ausführungsform ein Derivat der jeweiligen freien Form des erfindungsgemäß umzusetzenden aromatischen Alkohols ist. Der freie Alkohol kann dabei ebenso vorhanden sein; dann liegt demnach eine Mischung vor. Für diesen Fall kann das molare Verhältnis zwischen der freien Form des erfindungsgemäß umzusetzenden aromatischem Alkohols und der genannten zusätzlichen Komponente (Etherform eines aromatischen Alkohols) zwischen 0:100, bevorzugt, bevorzugt 1:1, oder 1:2 oder 1:4 betragen.

### Aliphatische oder aromatische Aldehyde

Die aliphatischen oder aromatischen Aldehyde, die die zweite Komponente beim Aufbau der Aminoplast-Außenhülle bilden, sind gemäss der vorliegenden Erfindung vorzugsweise ausgewaehlt aus der folgenden Gruppe Valeraldehyd, Capronaldehyd, Caprylaldehyd, Decanal, Succindialdehyd, Cyclohexancarbaldehyd, Cyclopentancarbaldehyd, 2-Methyl-1-propanal, 2-Methylpropionaldehyd, Acetaldehyd, Acrolein, Aldosteron, Antimycin A, 8'-Apobeta-caroten-8'-al, Benzaldehyd, Gutanal, Chloral, Citral, Citronellal, Crotonaldehyd, Dimethylaminobenzaldehyd, Folinsaeure, Fosmidomycin, Furfural, Glutaraldehyd, Glycerinaldehyd, Glykolaldehyd, Glyoxal, Glyoxylsaeure, Heptanal, 2-Hydroxybenzaldehyd, 3-Hydroxybutanal, Hydroxymethylfurfural, 4-Hydroxynonenal, Isobutanal, Isobutyraldehyd, Methacrolein, 2-Methylundecanal, Mucochlorsaeure, N-Methylformamid, 2-Nitrobenzaldehyd, Nonanal, Octanal, Oleocanthal, Orlistat, Pentanal, Phenylethanal, Phycocyanin, Piperonal, Propanal, Propenal, Protocatechualdehyd, Retinal, Salicylaldehyd, Secologanin, Streptomycin, Strophanthidin, Tylosin, Vanillin, Zimtaldehyd. Ausgschlossen ist Formaldehyd sowie solche Aldehyde, die Formaldehyd abspalten können (z.B. Paraformaldehyd).

Im Sinne der vorliegenden Erfindung kann die aldehydische Komponente mindestens ein oder zwei, besonders bevorzugt zwei freie Aldehyd-Gruppen pro Molekül, aufweisen, wobei es bevorzugt ist, wenn als aldehydische Komponente mindestens Glyoxal, Glutar- und/oder Succindialdehyd vorliegt.

In den erfindungsgemäßen Kapseln kann das molare Verhältnis von dem mindestens einen aromatischen Alkohol oder (Ether oder Derivat davon), zu der mindestens einen aldehydischen Komponente zwischen 1:1 und 1:4, besonders bevorzugt zwischen 1:2 und 1:3 und ganz besonders bevorzugt bei etwa 1 zu 2,6 liegen. Vorzugsweise werden die Alkohole und Aldehyde schon vorkondensiert und erst dann mit dem Slurry, der die intermediären Kapseln mit der Polyurethanhülle enthält in Kontakt gebracht. Dabei kann es ebenfalls wieder sinnvoll sein, filmbildende Polymere mitzuzusetzen.

### Vernetzungsmittel

In einer weiteren bevorzugten Ausführungsform des vorliegenden erfindungsgemäßen Verfahrens können die mit innerer und äußerer Hülle versehenen Kapseln noch gehärtet werden. Dazu behandelt man die Kapseln in der Lösung mit einem Vernetzungsmittel ("Cross-Linker"). Besonders geeignet sind hier für Ester der Phthalsäure, wie beispielsweise Diethylphthalat.

Alternativ können die Kapseln auch mit stickstoffhaltigen Agentien nachbehandelt werden. Für diesen Zweck kommen bevorzugt heterocyclische Verbindungen mit mindestens einem Stickstoffatom als Heteroatom, welches entweder mit einem aminosubstituierten Kohlenstoffatom oder einer Carbonylgruppe benachbart ist, wie zum Beispiel Pyridazin, Pyrimidin, Pyrazin, Pyrrolidon, Aminopyridin und davon abgeleitete Verbindungen zum Einsatz. Vorteilhafte Verbindungen dieser Gattung sind Aminopyridin und davon abgeleitete Verbindungen. Geeignet sind prinzipiell alle Aminopyridine, wie zum Beispiel Melamin, 2,6-Diaminopyridin, substituierte und dimere Aminopyridine und aus diesen Verbindungen hergestellte Mischungen. Vorteilhaft sind weiterhin Polyamide und Dicyandiamid, Harnstoff und seine Derivate sowie Pyrrolidon und davon abgeleitete Verbindungen. Beispiele fuer geeignete Pyrrolidone sind zum Beispiel Imidazolidinon und davon abgeleitete Verbindungen, wie zum Beispiel Hydantoin, dessen Derivate besonders vorteilhaft sind, insbesondere vorteilhaft sind von diesen Verbindungen Allantoin und seine Derivate. Besonders vorteilhaft sind weiter Triamino-1,3,5-Triazin (Melamin) und seine Derivate.

Es sei besonders betont, dass es sich hier um eine "reine" Nachbehandlung der Hülle handelt, um zu dieser bevorzugten Ausführungsform des erfindungsgemäßen Verfahrens zu gelangen. Mit anderen Worten: in dieser bevorzugten Ausführungsform ist das besagte stickstoffhaltige Agens nicht gleichmäßig am Aufbau der gesamten Kapselwand beteiligt sondern überwiegend auf die äußere Oberfläche der Kapselhülle konzentriert.

### Gewerbliche Anwendbarkeit

Ein weiterer Gegenstand der Erfindung betrifft Waschmittel bzw. Wäscheweichspülmittel, die mindestens einen oberflächenaktiven Stoff sowie die erfindungsgemäßen Wirkstoffkapseln, vorzugsweise in Mengen von etwa 0,1 bis etwa 10 Gew.-%, insbesondere etwa 0,5 bis etwa 5 Gew.-% und besonders bevorzugt in Mengen von etwa 1 bis etwa 3 Gew.-% - bezogen auf die Gesamtzusammensetzung - enthalten.

### Wasch- und Wäscheweichspülmittel ("Softener")

Wasch- und Wäscheweichspülmittel im Sinne der vorliegenden Erfindung, können in fester Form als Pulver, Granulate, Tabletten und dergleichen, aber auch flüssig, gelförmig oder pastös vorliegen. Es handelt es sich vorzugsweise um Waschmittel, die sowohl für manuelle oder maschinelle Wäsche, insbesondere von Textilien geeignet sind. Es kann sich auch um Wasch- oder Reinigungsmittel für den industriellen Bereich oder für den Haushaltsbereich handeln. Die WSR-Mittel können weitere handelsübliche Bestandteile aufweisen, wie beispielsweise Tenside, Gerüststoffe, Bleichmittel, Bleichmittelaktivatoren, Verdickungsmittel, Enzyme, Elektrolyte, pH-Stellmittel, Farb- und Duftstoffe, Schauminhibitoren, Antiredepositionsmittel, optische Aufheller, Vergrauungsinhibitoren, Knitterschutzmittel, antimikrobielle Wirkstoffe, Konservierungsmittel, Antioxidantien, Antistatika, UV-Adsorber, Schwermetallkomplexbildner und dergleichen. Diese Hilfsstoffe werden im Folgenden näher beschrieben:

### Oberflächenaktive Stoffe ("Tenside")

Als Tenside zur Herstellung der Wasch- oder Reinigungsmittel können neben den nichtionischen Tensiden auch Anion-, Kation-, Ampho- und/oder Niotenside und verzweigte Alkylsulfaten verwendet werden.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C12-14-Alkohole mit 3 EO, 4 EO oder 7 EO, C9-11-Alkohol mit 7 EO, C13-5-Alkohole mit 3 EO, 5 EO, 7 EO oder 8 EO, C12-18-Alkohole mit 3 EO, 5 EO oder 7 EO und Mischungen aus diesen, wie Mischungen aus C12-4-Alkohol mit 3 EO und C12-8-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind erfindungsgemäß einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Eine weitere Klasse von nichtionischen Tensiden, die vorteilhaft zur Herstellung von Wasch- oder Reinigungsmitteln eingesetzt werden kann, sind die Alkylpolyglycoside (APG). Einsetzbare Alkypolyglycoside genügen der allgemeinen Formel RO(G)Z, in der R für einen linearen oder verzweigten, insbesondere in 2-Stellung methylverzweigten, gesättigten oder ungesättigten, aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Glycosidierungsgrad z liegt dabei zwischen 1,0 und 4,0, vorzugsweise zwischen 1,0 und 2,0 und insbesondere zwischen 1,1 und 1,4.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können zur Herstellung der Wasch- oder Reinigungsmittel geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel R-CO-N(R1)-[Z], in der RCO für einen aliphatischen Acylrest mit 6 bis 22 Kohlenstoffatomen, R1 für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Zur Gruppe der Polyhydroxyfettsäureamide gehören auch Verbindungen der Formel R-CO-N(R1-O-R2)- [Z], in der R für einen linearen oder verzweigten Alkyl- oder Alkenylrest mit 7 bis 12 Kohlenstoffatomen, R1 für einen linearen, verzweigten oder cyclischen Alkylrest oder einen Arylrest mit 2 bis 8 Kohlenstoffatomen und R2 für einen linearen, verzweigten oder cyclischen Alkylrest oder einen Arylrest oder einen Oxy-Alkylrest mit 1 bis 8 Kohlenstoffatomen steht, wobei C1-4-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. [Z] wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann durch Umsetzung mit Fettsäuremethylestern in Gegenwart eines Alkoxids als Katalysator in die gewünschten Polyhydroxyfettsäureamide überführt werden.

Der Gehalt an nichtionischen Tensiden beträgt den flüssigen Wasch- und Reinigungsmitteln bevorzugt 5 bis 30 Gew.%, vorzugsweise 7 bis 20 Gew.% und insbesondere 9 bis 15 Gew.%, jeweils bezogen auf das gesamte Mittel.

Als anionische Tenside werden beispielsweise solche vom Typ der Sulfonate und Sulfate eingesetzt. Als Tenside vom Sulfonat-Typ kommen dabei vorzugsweise C9-3-Alkylbenzolsulfonate, Olefinsulfonate, d.h. Gemische aus Alken- und Hydroxyalkansulfonaten sowie Disulfonaten, wie man sie beispielsweise aus C12-8-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C12-8-Alkanen beispielsweise durch Sulfochlorierung oder Sulfoxidation mit anschließender Hydrolyse bzw. Neutralisation gewonnen werden. Ebenso sind auch die Ester von alpha-Sulfofettsäuren (Estersulfonate), zum Beispiel die alphasulfonierten Methylester der hydrierten Kokos-, Palmkern- oder Talgfettsäuren geeignet.

Auch geeignet sind Sulfonierungsprodukte von ungesättigten Fettsäuren, beispielsweise Ölsäure, in geringen Mengen, vorzugsweise in Mengen nicht oberhalb etwa 2 bis 3 Gew.-%. Insbesondere sind alpha -Sulfofettsäurealkylester bevorzugt, die eine Alkylkette mit nicht mehr als 4 C-Atomen in der Estergruppe aufweisen, beispielsweise Methylester, Ethylester, Propylester und Butylester. Mit besonderem Vorteil werden die Methylester der alpha - Sulfofettsäuren (MES), aber auch deren verseifte Disalze eingesetzt.

Als weitere anionische Tenside kommen Fettsäure-Derivate von Aminosäuren, beispielsweise von N-Methyltaurin (Tauride) und/oder von N-Methylglycin (Sarkoside) in Betracht. Insbesondere bevorzugt sind dabei die Sarkoside bzw. die Sarkosinate und hier vor allem Sarkosinate von höheren und gegebenenfalls einfach oder mehrfach ungesättigten Fettsäuren wie Oleylsarkosinat.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C12-C18-Fettalkohole, beispielsweise aus Kokosfettalkohol, Talgfettalkohol, Lauryl-, Myristyl-, Cetyl- oder Stearylalkohol oder der C10-C20-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C12-C16-Alkylsulfate und C12-C15-Alkylsulfate sowie C14-C15-Alkylsulfate bevorzugt. Auch 2,3-Alkylsulfate, die beispielsweise als Handelsprodukte der Shell Oil Company unter dem Namen DAN(R) erhalten werden können, sind geeignete Aniontenside.

Auch die Schwefelsäuremonoester der mit 1 bis 6 Mol Ethylenoxid ethoxylierten geradkettigen oder verzweigten C7-21-Alkohole, wie 2-Methyl-verzweigte C9-11-Alkohole mit im Durchschnitt 3,5 Mol Ethylenoxid (EO) oder C12-18-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C8-18-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Der Gehalt bevorzugter flüssiger Wasch- und Reinigungsmittel an anionischen Tensiden beträgt 1 bis 30 Gew.%, vorzugsweise 4 bis 25 Gew.% und insbesondere 5 bis 22 Gew.%, jeweils bezogen auf das gesamte Mittel. Es ist besonders bevorzugt, dass die Menge an Fettsäureseife mindestens 2 Gew.%und besonders bevorzugt mindestens 3 Gew.%und insbesondere bevorzugt mindestens 4 Gew.%beträgt.

Als weitere Tenside kommen zur Herstellung der erfindungsgemäßen Wasch- oder Reinigungsmittel sogenannte Gemini-Tenside in Betracht. Hierunter werden im Allgemeinen solche Verbindungen verstanden, die zwei hydrophile Gruppen und zwei hydrophobe Gruppen pro Molekül besitzen. Diese Gruppen sind in der Regel durch einen sogenannten "Spacer" voneinander getrennt. Dieser Spacer ist in der Regel eine Kohlenstoffkette, die lang genug sein sollte, dass die hydrophilen Gruppen einen ausreichenden Abstand haben, damit sie unabhängig voneinander agieren können. Derartige Tenside zeichnen sich im Allgemeinen durch eine ungewöhnlich geringe kritische Micellkonzentration und die Fähigkeit, die Oberflächenspannung des Wassers stark zu reduzieren, aus. In Ausnahmefällen werden jedoch unter dem Ausdruck Gemini-Tenside nicht nur dimere, sondern auch trimere Tenside verstanden.

Gemini-Tenside zur Herstellung von Wasch- oder Reinigungsmitteln sind beispielsweise sulfatierte Hydroxymischether gemäß der deutschen Patentanmeldung DE-A-43 21 022 oder Dimeralkoholbis- und Trimeralkohol-tris-sulfate und -ethersulfate gemäß der deutschen Patentanmeldung DE-A- 195 03 061. Endgruppenverschlossene dimere und trimere Mischether gemäß der deutschen Patentanmeldung DE-A-195 13 391 zeichnen sich insbesondere durch ihre Bi- und Multifunktionalität aus. So besitzen die genannten endgruppenverschlossenen Tenside gute Netzeigenschaften und sind dabei schaumarm, so dass sie sich insbesondere für den Einsatz in maschinellen Wasch- oder Reinigungsverfahren eignen.

Bevorzugt sind aus anwendungstechnischer Sicht Mischungen aus anionischen und nichtionischen Tensiden. Der Gesamt-Tensidgehalt des flüssigen Wasch- und Reinigungsmittel liegt vorzugsweise unterhalb von 40 Gew.- % und besonders bevorzugt unterhalb von 35 Gew.%, bezogen auf das gesamte flüssige Wasch- und Reinigungsmittel.

### Gerüststoffe

Als Gerüststoffe bzw. Builder, die in den flüssigen Wasch- und Reinigungsmitteln enthalten sein können, sind insbesondere Silikate, Aluminiumsilikate (insbesondere Zeolithe), Carbonate, organische Co-builder, Phosphate, Salze organischer Di- und Polycarbonsäuren sowie Mischungen dieser Stoffe zu nennen.

Geeignete kristalline, schichtförmige Natriumsilikate besitzen die allgemeine Formel NaMSiₓO₂ₓ₊₁*H2O, wobei M Natrium oder Wasserstoff bedeutet, x eine Zahl von 1,9 bis 4 und y eine Zahl von 0 bis 20 ist und bevorzugte Werte für x 2, 3 oder 4 sind. Bevorzugte kristalline Schichtsilikate der angegebenen Formel sind solche, in denen M für Natrium steht und x die Werte 2 oder 3 annimmt. Insbesondere sind sowohl beta - als auch delta -Natriumdisilikate Na₂Si₂O₅*yH₂O bevorzugt.

Einsetzbar sind auch amorphe Natriumsilikate mit einem Modul Na₂O: SiO₂ von 1: 2 bis 1: 3,3, vorzugsweise von 1: 2 bis 1: 2,8 und insbesondere von 1: 2 bis 1: 2,6, welche löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/Verdichtung oder durch Übertrocknung hervorgerufen worden sein. Im Rahmen dieser Erfindung wird unter dem Begriff "amorph" auch "röntgenamorph" verstanden. Dies heißt, dass die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharte Beugungsmaxima liefern. Dies ist so zu interpretieren, dass die Produkte mikrokristalline Bereiche der Größe 10 bis einige Hundert nm aufweisen, wobei Werte bis maximal 50 nm und insbesondere bis maximal 20 nm bevorzugt sind. Derartige sogenannte röntgenamorphe Silikate, weisen ebenfalls eine Löseverzögerung gegenüber den herkömmlichen Wassergläsern auf. Insbesondere bevorzugt sind verdichtete/kompaktierte amorphe Silikate, compoundierte amorphe Silikate und übertrocknete röntgenamorphe Silikate.

Ein verwendbarer feinkristalliner, synthetischer und gebundenes Wasser enthaltender Zeolith ist vorzugsweise Zeolith A und/oder P. Als Zeolith P wird Zeolith MAP TM (Handelsprodukt der Firma Crosfield) besonders bevorzugt. Geeignet sind jedoch auch Zeolith X sowie Mischungen aus A, X und/oder P. Kommerziell erhältlich und im Rahmen der vorliegenden Erfindung bevorzugt einsetzbar ist beispielsweise auch ein Co-Kristallisat aus Zeolith X und Zeolith A (ca. 80 Gew.-% Zeolith X), das von der Firma SASOL unter dem Markennamen VEGOBOND AX(R) vertrieben wird und durch die Formel

nNa2O*(1-n)K₂O*Al₂O₃.(2-2,5)*SiO₂.(3,5-5,5)*H₂O,

beschrieben werden kann, entspricht. Der Zeolith kann als sprühgetrocknetes Pulver oder auch als ungetrocknete, von ihrer Herstellung noch feuchte, stabilisierte Suspension zum Einsatz kommen. Für den Fall, dass der Zeolith als Suspension eingesetzt wird, kann diese geringe Zusätze an nichtionischen Tensiden als Stabilisatoren enthalten, beispielsweise 1 bis 3 Gew.%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Messmethode: Coulter Counter) auf und enthalten vorzugsweise 18 bis 22 Gew.%, insbesondere 20 bis 22 Gew.% an gebundenem Wasser.

Selbstverständlich ist auch ein Einsatz der allgemein bekannten Phosphate als Buildersubstanzen möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate.

Als Builder sind organische Co-builder geeignet, insbesondere Polycarboxylate/Polycarbonsäuren, polymere Polycarboxylate, Asparaginsäure, Polyacetale, Dextrine, sowie Phosphonate.

Polymere Polycarboxylate sind beispielsweise die Alkalimetallsalze der Polyacrylsäure oder der Polymethacrylsäure, beispielsweise solche mit einer relativen Molekülmasse von 500 bis 70000 g/mol. Bei den für polymere Polycarboxylate angegebenen Molmassen handelt es sich im Sinne dieser Schrift um gewichtsmittlere Molmassen Mw der jeweiligen Säureform, die grundsätzlich mittels Gelpermeationschromatographie (GPC) bestimmt wurden, wobei ein UV-Detektor eingesetzt wurde. Die Messung erfolgte dabei gegen einen externen Polyacrylsaeure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsulfonsäuren gemessenen Molmassen sind in der Regel deutlich höher als die in dieser Schrift angegebenen Molmassen.

Geeignete Polymere sind insbesondere Polyacrylate, die bevorzugt eine Molekülmasse von 2000 bis 20000 g/mol aufweisen. Aufgrund ihrer überlegenen Löslichkeit können aus dieser Gruppe wiederum die kurzkettigen Polyacrylate, die Molmassen von 2000 bis 10000 g/mol, und besonders bevorzugt von 3000 bis 5000 g/mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2.000 bis 70.000 g/mol, vorzugsweise 20.000 bis 50.000 g/mol und insbesondere 30.000 bis 40.000 g/mol.

Insbesondere bevorzugt sind auch biologisch abbaubare Polymere aus mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsaeure sowie Zucker-Derivate enthalten.

Weitere bevorzugte Copolymere sind solche, die als Monomere vorzugsweise Acrolein und Acrylsäure/Acrylsäuresalze bzw. Acrolein und Vinylacetat aufweisen.

Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren bzw. deren Salze und Derivate, die neben Co-builder-Eigenschaften auch eine bleichstabilisierende Wirkung aufweisen.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500.000 g/mol. Dabei ist ein Polysaccharid mit einem Dextrose- äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weissdextrine mit höheren Molmassen im Bereich von 2000 bis 30000 g/mol.

Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Ein an C6 des Saccharidrings oxidiertes Produkt kann besonders vorteilhaft sein.

Ein bevorzugtes Dextrin ist in der britischen Patentanmeldung GB 9,419,091 B1 beschrieben. Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Derartige oxidierte Dextrine und Verfahren ihrer Herstellung sind beispielsweise aus den europäischen Patentanmeldungen EP 032202 A**,** EP 0427349 A**,** EP 0472042 A und EP 0542496 A sowie den internationalen Patentanmeldungen WO 1992/018542 A**,** WO 1993/008251 A**,** WO 1994/ 028030 A**,** WO 1995/007303 A**,** WO 1995/012619 A und WO 1995/020608 A bekannt. Ein an C₆ des Saccharidrings oxidiertes Produkt kann besonders vorteilhaft sein.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS) bevorzugt in Form seiner Natrium- oder Magnesiumsalze verwendet. Weiterhin bevorzugt sind in diesem Zusammenhang auch Glycerindisuccinate und Glycerintrisuccinate, wie sie beispielsweise in den US-amerikanischen Patentschriften US 4,524,009**,** US 4,639 325**,** in der europäischen Patentanmeldung EP 0150930 A und der japanischen Patentanmeldung JP 1993/339896 A beschrieben werden.

Weitere brauchbare organische Co-builder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten. Derartige Co-builder werden beispielsweise in der internationalen Patentanmeldung WO 1995/020029 A beschrieben.

Eine weitere Substanzklasse mit Co-buildereigenschaften stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Co-builder. Es wird vorzugsweise als Natriumsalz eingesetzt, wobei das Dinatriumsalz neutral und das Tetranatriumsalz alkalisch (pH 9) reagiert. Als Aminoalkan-phosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z. B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkan-phosphonate besitzen zudem ein ausgeprägtes Schwermetallbindevermögen. Dementsprechend kann es, insbesondere wenn die Wasch- und Reinigungsmittel auch Bleiche enthalten, bevorzugt sein Aminoalkan-phosphonate, insbesondere DTPMP, einzusetzen, oder Mischungen aus den genannten Phosphonaten zur Herstellung der Mittel zu verwenden.

Darüber hinaus können alle Verbindungen, die in der Lage sind, Komplexe mit Erdalkaliionen auszubilden, als Co-builder eingesetzt werden.

Weitere brauchbare organische Gerüstsubstanzen sind auch die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen.

Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- und/oder Reinigungsmitteln. Insbesondere sind hierbei Citronensäure, Bernsteinsäure, Glutarsäure, Adipinsäure, Gluconsäure und beliebige Mischungen aus diesen zu nennen.

### Bleichmittel und Bleichkatalysatoren

Unter den als Bleichmitteln dienenden, in Wasser H2O2 liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H2O2 liefernde persaure Salze oder Persäuren, wie Perbenzoate, Peroxophthalate, Diperazelainsäure, Phthaloiminopersäure oder Diperdodecandisäure. Um beim Waschen bei Temperaturen von 60 °C und darunter eine verbesserte Bleichwirkung zu erreichen, können Bleichaktivatoren in die Wasch- und Reinigungsmittel eingearbeitet werden. Als Bleichaktivatoren können Verbindungen, die unter Perhydrolysebedingungen aliphatische Peroxocarbonsäuren mit vorzugsweise 1bis 10 C-Atomen, insbesondere 2 bis 4 C-Atomen, und/oder gegebenenfalls substituierte Perbenzoesäure ergeben, eingesetzt werden. Geeignet sind Substanzen, die O-und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin(DADHT), acylierte Glykolurile, insbesondere Tetraacetylglykoluril (TAGU), N-Acylimide,insbesondere N-Nonanoylsuccinimid (NOSI), acylierte Phenolsulfonate, insbesonderen-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran. Zusätzlich zu den konventionellen Bleichaktivatoren oder an deren Stelle können auch sogenannte Bleichkatalysatoren in die Textilbehandlungsmitteleingearbeitet werden. Bei diesen Stoffen handelt es sich um bleichverstärkende Übergangsmetallsalze bzw. Übergangsmetallkomplexe wie beispielsweise Mn-,Fe-, Co-, Ru- oder Mo-Salenkomplexe oder -carbonylkomplexe. Auch Mn-, Fe-, Co-,Ru-, Mo-, Ti-, V- und Cu-Komplexe mit stickstoffhaltigen Tripod-Liganden sowie Co-, Fe-, Cu- und Ru-Amminkomplexe sind als Bleichkatalysatoren verwendbar.

### Verdickungsmittel

Ein flüssiges Wasch- und Reinigungsmittel kann ein Verdickungsmittelenthalten. Das Verdickungsmittel kann beispielsweise einen Polyacrylat-Verdicker, Xanthan Gum, Gellan Gum, Guarkernmehl, Alginat, Carrageenan, Carboxymethylcellulose, Bentonite, Wellan Gum, Johannisbrotkernmehl, Agar-Agar, Tragant, Gummi arabicum, Pektine, Polyosen, Stärke, Dextrine, Gelatine und Casein umfassen. Aber auch abgewandelte Naturstoffe wie modifizierten Stärken und Cellulosen, beispielhaftseien hier Carboxymethylcellulose und andere Celluloseether, Hydroxyethyl- und -propylcellulose sowie Kernmehlether genannt, können als Verdickungsmittel eingesetzt werden.

Zu den Polyacryl- und Polymethacryl-Verdickern zählen beispielsweise die hochmolekularen mit einem Polyalkenylpolyether, insbesondere einem Allylether von Saccharose, Pentaerythrit oder Propylen, vernetzten Homopolymere der Acrylsäure (INCI-Bezeichnung gemäß "International Dictionary of Cosmetic Ingredients "der "The Cosmetic, Toiletry and Fragrance Association (CTFA)": Carbomer),die auch als Carboxyvinylpolymere bezeichnet werden. Solche Polyacrylsäuren sind u.a. von der Fa. 3V Sigma unter dem Handelsnamen Polygel®,z.B. Polygel DA, und von der Fa. B.F. Goodrich unter dem Handelsnamen Carbopol® erhältlich, z.B. Carbopol 940 (Molekulargewicht ca. 4.000.000), Carbopol 941 (Molekulargewicht ca. 1.250.000) oder Carbopol 934 (Molekulargewicht ca. 3.000.000).Weiterhin fallen darunter folgende Acrylsäure-Copolymere: (i) Copolymere von zwei oder mehr Monomeren aus der Gruppe der Acrylsäure, Methacrylsäure und ihrer einfachen, vorzugsweise mit C1-4-Alkanolen gebildeten, Ester (INCI AcrylatesCopolymer), zu denen etwa die Copolymere von Methacrylsäure, Butylacrylat und Methylmethacrylat (CAS-Bezeichnung gemäß Chemical Abstracts Service: 25035-69-2)oder von Butylacrylat und Methylmethacrylat (CAS 25852-37-3) gehören und die beispielsweise von der Fa. Rohm and Haas unter den Handelsnamen Aculyn® und Acusol® sowie von der Firma Degussa (Goldschmidt) unter dem Handelsnamen Tego® Polymer erhältlich sind, z.B. die anionischen nicht assoziativen Polymere Aculyn 22, Aculyn 28, Aculyn 33 (vernetzt), Acusol 810,Acusol 820, Acusol 823 und Acusol 830 (CAS 25852-37-3); (ii) vernetzte hochmolekulare Acrylsäurecopolymere, zu denen etwa die mit einem Allylether der Saccharose oder des Pentaerythrits vernetzten Copolymere von C10-30-Alkylacrylaten mit einem oder mehreren Monomeren aus der Gruppe der Acrylsäure, Methacrylsäure und ihrer einfachen, vorzugsweise mit C1-4-Alkanolen gebildeten, Ester (INCI Acrylates/C10-30Alkyl Acrylate Crosspolymer) gehören und die beispielsweise von der Fa. B.F. Goodrich unter dem Handelsnamen Carbopol® erhältlich sind, z.B. das hydrophobierte Carbopol ETD 2623 und Carbopol 1382 (INCI Acrylates/C10-30Alkyl Acrylate Crosspolymer) sowie Carbopol Aqua 30 (früher Carbopol EX 473).

Ein weiteres bevorzugt einzusetzendes polymeres Verdickungsmittel ist Xanthan Gum, ein mikrobielles anionisches Heteropolysaccharid, das von Xanthomonascampestris und einigen anderen Species unter aeroben Bedingungen produziert wird und eine Molmasse von 2 bis 15 Millionen Dalton aufweist. Xanthan wird aus einer Kette mit beta-1,4-gebundener Glucose (Cellulose) mit Seitenketten gebildet. Die Struktur der Untergruppen besteht aus Glucose, Mannose, Glucuronsaeure,Acetat und Pyruvat, wobei die Anzahl der Pyruvat-Einheiten die Viskosität des Xanthan Gums bestimmt. Als Verdickungsmittel kommt insbesondere auch ein Fettalkohol in Frage. Fettalkohole können verzweigt oder nichtverzweigt sowie nativen Ursprungs oderpetrochemischen Ursprungs sein. Bevorzugte Fettalkohole haben eine C-Kettenlänge von 10 bis 20 C-Atomen, bevorzugt 12 bis 18. Bevorzugt werden Mischungen unterschiedlicher C-Kettenlängen, wie Talgfettalkohol oder Kokosfettalkohol, eingesetzt. Beispiele sind Lorol® Spezial (C12-14-ROH) oder Lorol® Technisch(C12-18-ROH) (beide ex Cognis). Bevorzugte flüssige Wasch- und Reinigungsmittel enthalten bezogen auf das gesamte Mittel 0.01 bis 3 Gew.% und vorzugsweise 0.1 bis1 Gew.% Verdickungsmittel. Die Menge an eingesetztem Verdickungsmittel ist dabei abhängig von der Art des Verdickungsmittels und dem gewünschten Grad der Verdickung.

### Enzyme

Die Wasch- und Reinigungsmitteln können Enzyme in verkapselter Form und/oder direkt in den Wasch- und Reinigungsmittel enthalten. Als Enzyme kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen, Hemicellulase, Cutinasen, beta-Glucanasen, Oxidasen, Peroxidasen, Perhydrolasen und/oder Laccasen und Gemische der genannten Enzyme in Frage. Alle diese Hydrolasen tragen in der Wäsche zur Entfernung von Verfleckungen wie Protein-, fett- oder stärkehaltigen Verfleckungen und Vergrauungen bei. Cellulasen und andere Glykosylhydrolasenkoennen darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie Bacillus subtilis, Bacillus licheniformis, Streptomyceus griseus und Humicolainsolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere alpha-Amylasen, Iso-Amylasen, Pullulanasen und Pektinasen. Als Cellulasen werden vorzugsweise Cellobiohydrolasen, Endoglucanasen und p-Glucosidasen, die auch Cellobiasen genannt werden, bzw. Mischungen aus diesen eingesetzt. Da sich verschiedene Cellulase-Typen durch ihre CMCase- und Avicelase-Aktivitäten unterscheiden, können durch gezielte Mischungen der Cellulasen die gewünschten Aktivitäten eingestellt werden.

Die Enzyme können an Trägerstoffe adsorbiert sein, um sie gegen vorzeitige Zersetzung zu schützen. Der Anteil der Enzyme, der Enzymflüssigformulierung(en) oder der Enzymgranulate direkt in Wasch- und Reinigungsmittel kann beispielsweise etwa 0,01 bis 5 Gew.%, vorzugsweise 0.12 bis etwa 2.5 Gew.% betragen.

Es kann, beispielsweise bei speziellen Wasch- und Reinigungsmitteln für Konsumenten mit Allergien, aber auch bevorzugt sein, dass das Wasch- und Reinigungsmittel keine Enzyme enthält.

### Elektrolyte

Als Elektrolyte aus der Gruppe der anorganischen Salze kann eine breite Anzahl der verschiedensten Salze eingesetzt werden. Bevorzugte Kationen sind die Alkali- und Erdalkalimetalle, bevorzugte Anionen sind die Halogenide und Sulfate. Aus herstellungstechnischer Sicht ist der Einsatz von NaCl oder MgCl₂ in den Wasch- und Reinigungsmitteln bevorzugt. Der Anteil an Elektrolyten in den Wasch- und Reinigungsmittel beträgt üblicherweise 0,1 bis 5 Gew.-%.

### Lösungsmittel

Nichtwässrige Lösungsmittel, die in den flüssigen Wasch- und Reinigungsmittel eingesetzt werden können, stammen beispielsweise aus der Gruppe der ein- oder mehrwertigen Alkohole, Alkanolamine oder Glykolether, sofern sie im angegebenen Konzentrationsbereich mit Wasser mischbar sind. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethyl-, -ethyl-oder -propylether, Dipropylenglykolmonomethyl- oder -ethylether, Di-isopropylenglykolmonomethyl-oder -ethylether, Methoxy-, Ethoxy- oder Butoxytriglykol, 1-Butoxyethoxy-2-propanol,3-Methyl-3-methoxybutanol, Propylen-glykol-t-butylether sowie Mischungen dieser Lösungsmittel. Nichtwässrige Lösungsmittel können in den flüssigen Wasch- und Reinigungsmitteln in Mengen zwischen 0,5 und 15 Gew.%, bevorzugt aber unter 12 Gew.% und insbesondere unterhalb von 9 Gew.% eingesetzt werden.

### Viskosität

Die Viskosität der Wasch- und Reinigungsmittel in flüssiger Form kann mit üblichen Standardmethoden (beispielsweise Brookfield-Viskosimeter LVT-II bei 20 U/min und 20°C, Spindel 3) gemessen werden und liegt für flüssige Waschmittel vorzugsweise im Bereich von 500 bis 5000 mPas. Bevorzugte weisen flüssige Wasch- und Reinigungsmitteln Viskositäten von 700 bis 4000 mPas auf, wobei Werte zwischen 1000 und 3000 mPas besonders bevorzugt sind. Die Viskosität von Weichspülern beträgt vorzugsweise 20 bis 4000 mPas, wobei Werte zwischen 40 und 2000 mPas besonders bevorzugt sind. Insbesondere bevorzugt liegt die Viskosität von Weichspülern von 40 bis 1000 mPas.

### pH-Stellmittel

Um den pH-Wert der flüssigen Wasch- und Reinigungsmitteln in den gewünschten Bereich zu bringen, kann der Einsatz von pH-Stellmitteln angezeigt sein. Einsetzbar sind hier sämtliche bekannten Säuren bzw. Laugen, sofern sich ihr Einsatz nicht aus anwendungstechnischen oder ökologischen Gründen bzw. aus Gründen des Verbraucherschutzes verbietet. Üblicherweise überschreitet die Menge dieser Stellmittel 7 Gew.% der Gesamtformulierung nicht. Der pH-Wert von flüssigen Wasch- und Reinigungsmitteln liegt bevorzugt zwischen 4 und 10 und bevorzugt zwischen 5.5 und 8.5. Der pH-Wert von flüssigen Weichspülern liegt bevorzugt zwischen 1 und 6 und bevorzugt zwischen 1.5 und 3.5.

### Farbstoffe

Um den ästhetischen Eindruck der Textilbehandlungsmittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Wasch- und Reinigungsmittel und gegen Licht sowie keine ausgeprägte Substantivität gegenüber Textilfasern, um diese nicht anzufärben.

### Antiredepositionsmittel

Geeignete Soil-Release-Polymere, die auch als "Antiredepositionsmittel" bezeichnet werden, sind beispielsweise nichtionische Celluloseether wie Methylcellulose und Methylhydroxypropylcellulose mit einem Anteil an Methoxygruppen von 15 bis 30Gew.% und an Hydroxypropylgruppen von 1 bis 15 Gew.%, jeweils bezogen auf den nichtionischen Celluloseether sowie die aus dem Stand der Technik bekannten Polymere der Phthalsäure und/oder Terephthalsäure bzw. von deren Derivaten, insbesondere Polymere aus Ethylenterephthalaten und/oder Polyethylen- und/oder Polypropylenglykolterephthalaten oder anionisch und/oder nichtionisch modifizierten Derivaten von diesen. Geeignete Derivate umfassen die sulfonierten Derivate der Phthalsäure- und Terephthalsäure-Polymere.

### Optische Aufheller

Optische Aufheller (sog. "Weisstöner") können den Wasch- und Reinigungsmitteln zugesetzt werden, um Vergrauungen und Vergilbungen der behandelten Textilen Flächengebilden zu beseitigen. Diese Stoffe ziehen auf die Faser auf und bewirken eine Aufhellung und vorgetäuschte Bleichwirkung, indem sie unsichtbare Ultraviolettstrahlung in sichtbares längenwelliges Lichtumwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiss ergibt. Geeignete Verbindungen stammen beispielsweiseaus den Substanzklassen der 4,4'-Diamino-2,2'-stilbendisulfonsaeuren (Flavonsäuren), 4,4'-Distyryl-biphenylen, Methylumbelliferone, Cumarine, Dihydrochinolinone, 1,3-Diarylpyrazoline,Naphthalsaeureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0 % und 0.3 Gew.%, bezogen auf das fertige Wasch- und Reinigungsmittel, eingesetzt.

### Vergrauungsinhibitoren

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Naturgeeignet, beispielsweise Leim, Gelatine, Salze von Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, zum Beispiel abgebaute Stärke, Aldehydstärken usw. Auch Polyvinylpyrrolidon ist brauchbar. Bevorzugt werden jedoch Celluloseether wie Carboxymethylcellulose (Na-Salz), Methylcellulose, Hydroxyalkylcellulose und Mischether wie Methylhydroxyethylcellulose, Methylhydroxypropylcellulose, Methylcarboxymethyl-cellulose und deren Gemische in Mengen von 0.1 bis 5 Gew.%, bezogen auf die Wasch- und Reinigungsmitteln, eingesetzt.

### Knitterschutzmittel

Da textile Flächengebilde, insbesondere aus Reyon, Zellwolle, Baumwolle und deren Mischungen, zum Knittern neigen können, weil die Einzelfasern gegen Durchbiegen, Knicken, Pressen und Quetschen quer zur Faserrichtung empfindlich sind, können die Wasch- und Reinigungsmittel synthetische Knitterschutzmittel enthalten. Hierzu zählen beispielsweise synthetische Produkte auf der Basis von Fettsäuren, Fettsäureestern, Fettsäureamiden, - alkylolestern,-alkylolamiden oder Fettalkoholen, die meist mit Ethylenoxid umgesetzt sind, oder Produkte auf der Basis von Lecithin oder modifizierter Phosphorsäureester.

### Antimikrobielle Wirkstoffe

Zur Bekämpfung von Mikroorganismen können die Wasch- und Reinigungsmitteln antimikrobielle Wirkstoffe enthalten. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppensind beispielsweise Benzalkoniumchloride, Alkylarylsulfonate, Halogenphenole und Phenolmercuriacetat, wobei bei den erfindungemäßen Wasch- und Reinigungsmitteln auch gänzlich auf diese Verbindungen verzichtet werden kann.

### Konservierungsmittel

Die erfindungsgemäßen Wasch- und Reinigungsmittel können Konservierungsmittel enthalten, wobei vorzugsweise nur solche eingesetzt werden, die kein oder nur ein geringes hautsensibilisierendes Potential besitzen. Beispiele sind Sorbinsäure und seine Salze, Benzoesäure und seine Salze, Salicylsäure und seine Salze, Phenoxyethanol, 3-Iodo-2-propynylbutylcarbamat, Natrium N-(hydroxymethyl)glycinat, Biphenyl-2-ol sowie Mischungen davon. Ein geeignetes Konservierungsmittel stellt die lösungsmittelfreie, wässrige Kombination von Diazolidinylharnstoff, Natriumbenzoat und Kaliumsorbat (erhältlich als Euxyl® K 500ex Schülke and Mayr) dar, welches in einem pH-Bereich bis 7 eingesetzt werden kann. Insbesondere eignen sich Konservierungsmittel auf Basis von organischen Säuren und/oder deren Salzen zur Konservierung der erfindungsgemäßen, hautfreundlichen Wasch- und Reinigungsmittel.

### Antioxidantien

Um unerwünschte, durch Sauerstoffeinwirkung und andere oxidative Prozesse verursachte Veränderungen an den Wasch- und Reinigungsmitteln und/oder den behandelten textilen Flächengebilden zu verhindern, können die Wasch- und Reinigungsmittel Antioxidantien enthalten. Zu dieser Verbindungsklasse gehören beispielsweise substituierte Phenole, Hydrochinone, Brenzcatechine und aromatische Amine sowie organische Sulfide, Polysulfide, Dithiocarbamate, Phosphite, Phosphonate und Vitamin E.

### Antistatika

Ein erhöhter Tragekomfort kann aus der zusätzlichen Verwendung von Antistatika resultieren, die den Wasch- und Reinigungsmitteln zusätzlich beigefügt werden. Antistatika vergrößern die Oberflächenleitfähigkeit und ermöglichen damit ein verbessertes Abfließen gebildeter Ladungen. Antistatika sind in der Regel Substanzen mit wenigstens einem hydrophilen Molekuelliganden und geben auf den Oberflächen einen mehr oder minder hygroskopischen Film. Diese zumeist grenzflächenaktiven Antistatika lassen sich in stickstoffhaltige (Amine, Amide, quartäre Ammoniumverbindungen), phosphorhaltige (Phosphorsaeureester) und schwefelhaltige (Alkylsulfonate, Alkylsulfate) Antistatika unterteilen. Lauryl-(bzw. Stearyl-)dimethylbenzylammoniumchloride eignen sich als Antistatika für textile Flächengebilde bzw. als Zusatz zu Wasch- und Reinigungsmitteln, wobei zusätzlich ein Avivageeffekt erzielt wird.

### Schauminhibitoren

Zur Verbesserung der Wiederbenetzbarkeit der behandelten textilen Flächengebilde und zur Erleichterung des Bügelns der behandelten textilen Flächengebilde können in den Textilbehandlungsmitteln beispielsweise Silikonderivate eingesetzt werden. Diese verbessern zusätzlich das Ausspülverhalten der Wasch- und Reinigungsmittel durch ihre schauminhibierenden Eigenschaften. Bevorzugte Silikonderivate sind beispielsweise Polydialkyl- oder Alkylarylsiloxane, bei denen die Alkylgruppen ein bis fünf C-Atome aufweisen und ganz oder teilweise fluoriert sind. Bevorzugte Silikone sind Polydimethylsiloxane, die gegebenenfalls derivatisiert sein können und dann aminofunktionell oder quaterniert sind bzw. Si-OH-, Si-H-und/oder Si-Cl-Bindungen aufweisen. Die Viskositäten der bevorzugten Silikone liegen bei 25 °C im Bereich zwischen 100 und 100.000 mPas, wobei die Silikone in Mengen zwischen 0.2 und 5 Gew.%, bezogen auf das gesamte Wasch- und Reinigungsmittel eingesetzt werden können.

### UV-Absorber

Schließlich können die Wasch- und Reinigungsmittel auch UV-Absorber enthalten, die auf die behandelten textilen Flächengebilde aufziehen und die Lichtbeständigkeit der Fasern verbessern. Verbindungen, die diese gewünschten Eigenschaften aufweisen, sind beispielsweise die durch strahlungslose Deaktivierung wirksamen Verbindungen und Derivate des Benzophenons mit Substituenten in 2- und/oder4-Stellung. Weiterhin sind auch substituierte Benzotriazole, in 3-Stellung Phenyl-substituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet.

### Schwermetallkomplexbildner

Um die durch Schwermetalle katalysierte Zersetzung bestimmter Waschmittel-Inhaltsstoffe zu vermeiden, können Stoffe eingesetzt werden, die Schwermetalle komplexieren. Geeignete Schwermetallkomplexbildner sind beispielsweise die Alkalisalze der Ethylendiamintetraessigsäure (EDTA) oder der Nitrilotriessigsäure (NTA) sowie Alkalimetallsalze von anionischen Polyelektrolyten wie Polymaleaten und Polysulfonaten. Eine bevorzugte Klasse von Komplexbildnern sind die Phosphonate, die in bevorzugten Textilbehandlungsmitteln in Mengen von 0.01 bis 2.5 Gew.-%, vorzugsweise 0.02 bis 2 Gew.% und insbesondere von 0.03 bis 1.5 Gew.% enthalten sind. Zu diesen bevorzugten Verbindungen zählen insbesondere Organophosphonate wie beispielsweise1-Hydroxyethan-1,1-diphosphonsäure (HEDP), Aminotri(methylenphosphonsäure) (ATMP), Diethylentriaminpenta(methylenphosphonsäure) (DTPMP bzw. DETPMP) sowie 2-Phosphonobutan-1,2,4-tricarbonsäure (PBS-AM), die zumeist in Form ihrer Ammonium- oder Alkalimetallsalze eingesetzt werden.

### Herstellung der Zubereitungen

Die Herstellung fester WSR-Mittel kann nach den üblichen Verfahren erfolgen, wie beispielsweise Turmsprühverfahren, Wirbelschichttrockung, Agglomeration, Pulververmischung, Tablettierung, Granulierung, speziell SKET-Granulierung.

Die Herstellung flüssiger WSR-Mittel erfolgt ebenfalls mittels üblicher und bekannter Methoden und Verfahren, indem beispielsweise die Bestandteile einfach in Rührkesseln vermischt werden, wobei Wasser, nicht-wässrige Lösungsmittel und Tenside, zweckmäßigerweise vorgelegt werden und die weiteren Bestandteile portionsweise hinzugefügt werden. So können flüssige Wasch- und Reinigungsmittel hergestellt werden, indem die sauren Komponenten wie beispielsweise die linearen Alkylsulfonate, Zitronensäure, Borsäure, Phosphonsäure, die Fettalkoholethersulfate, usw. und die nichtionischen Tenside vorgelegt werden. Die Lösungsmittelkomponente wird vorzugsweise auch zu diesem Zeitpunkt hinzugegeben, die Zugabe kann aber auch zu einem späteren Zeitpunkt erfolgen. Zu diesen Komponenten kann das Verdickungsmittel, beispielsweise ein Polyacrylat gegeben werden. Anschließend wird eine Base wie beispielsweise NaOH, KOH, Triethanolamin oder Monoethanolamin gefolgt von der Fettsäure, falls vorhanden, hinzugefügt. Darauf folgend werden die restlichen Inhaltsstoffe und die restlichen Lösungsmittel des wässrigen flüssigen Wasch- und Reinigungsmittel zu der Mischung gegeben und der pH-Wert auf ungefähr 8,5 eingestellt. Abschließend können die zu dispergierenden Partikel zugegeben und durch Mischen homogen in dem wässrigen flüssigen Wasch- und Reinigungsmittel verteilt werden.

### Textile Ausrüstung

Die Ausrüstung der Textilien kann beispielsweise durch Zwangsapplikation erfolgen, vorzugsweise findet sie jedoch über den Waschprozess statt. Ein weiterer Gegenstand der Erfindung betrifft daher ein Verfahren zur Ausrüstung von Textilien, umfassend die folgenden Schritte:
(i) Bereitstellen einer wässrigen Flotte enthaltend die auszurüstenden Textilien;
(ii) Zugabe eines Waschmittels oder Wäscheweichspülmittels, wie oben beschrieben, also enthaltend mindestens einen oberflächenaktiven Stoff sowie die Kapseln der vorliegenden Erfindung;
(iii) Mechanische Behandlung, d.h. Waschen der in der Flotte enthaltenen Textilien mit den Wirkstoffkapseln; und
(iv) Trocknen der Textilien, entweder auf der Leine oder in einem Trockner.

Weitere Gegenstände der Erfindung betreffen die Verwendung der neuen Wirkstoffkapseln zur Herstellung von Waschmitteln oder Wäscheweichspülmitteln sowie zur Ausrüstung von Textilien, Garnen und textilen Flächengebilden.

### BEISPIELE

### Herstellbeispiel H1

### "2 Layer Kapsel"

In einem heizbaren 500 ml Dreihalskolben mit KPG-Rührer wurden 200 g Parfümöl vorgelegt und unter Rühren mit 7 g Hexamethylendiisocyanat Uretdion (Baymicron® OXA WM33) sowie 3 g Fennocap® 2301 versetzt. Anschließend wurde der Mischung portionsweise eine Lösung von 5,3 g Polyvinylalkohol (Celvol® 523) in 300 ml Wasser zugegeben und dabei auf 35 °C erhitzt. Die Mischung wurde bei dieser Temperatur über eine Zeitspanne von etwa 15 Minuten bei etwa 1.400 Upm gerührt, bis eine homogene Emulsion erhalten wurde. Anschließend wurde der Emulsion 6 g Guadiniumcarbonat zugegeben und auf diese Weise die Bildung der inneren Kapselhülle initiiert.

Getrennt von diesem Ansatz wurde in einem zweiten beheizbaren 500 ml Dreihalskolben mit KPG-Rührer eine Mischung von 4,2 Resorcin und 21 g Glutaraldehyd in 70 g Wasser gelöst und bei einem pH-Wert von 6,9 und einer Temperatur von 52 °C vorkondensiert. Der Ansatz wurde portionsweise zunächst mit der zuvor hergestellten verkapselten Parfümölmischung und weiteren 2,2 g Polyvinylalkohol versetzt und etwa 15 Minuten bei 1.400 Upm gerührt, wobei die zuvor gebildeten isocyanatbasierten Kapseln mit einer zweiten Aminoplasthülle überzogen wurden. Anschließend wurde dem Ansatz 42,1 g Diethylphthalat zugegeben die äußere Aminoplasthülle bei einem pH-Wert von 9,2 und einer Temperatur vernetzt.

### Anwendungstechnische Beispiele 2 sowie V1 und V2

Die doppelwandigen Kapseln gemäß Beispiel 1 wurden durch Zwangsapplikation auf Leinengewebe aufgebracht und dieses in einer Waschmaschine ohne Zugabe von Waschmittel bei 30°C 15 Minuten gewaschen. Das gewaschene Gewebe wurde sowohl in nassem wie im getrockneten Zustand hinsichtlich seiner Duftintensität von einem Panel bestehend aus 5 erfahrenen Testern auf einer Skala von (1 = parfümfrei bzw. nicht wahrnehmbar) bis (5 = intensiv) beurteilt (Beispiel 2). Zum Vergleich wurde Leinengewebe unter den gleichen Bedingungen mit handelsüblichen Kapseln mit nur einer Hülle ausgerüstet, nämlich zum einen Kapseln, deren Hülle ausschließlich von Polyisocyanaten gebildet wurde (Vergleichsbeispiel V1) und solchen, bei denen die Hülle von formaldehydfreien Aminoplasten gebildet wurde (Vergleichsbeispiel V2). Die Ergebnisse sind in **Tabelle 1** zusammengefasst; die Duftintensitäten stellen die Mittelwerte aus den Paneltests dar.

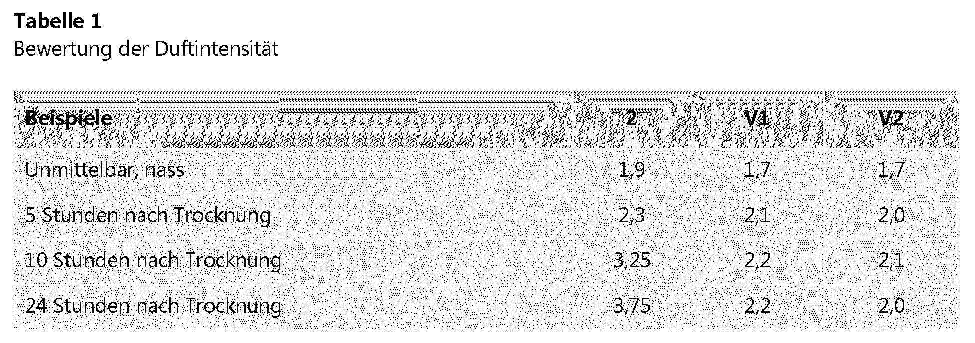

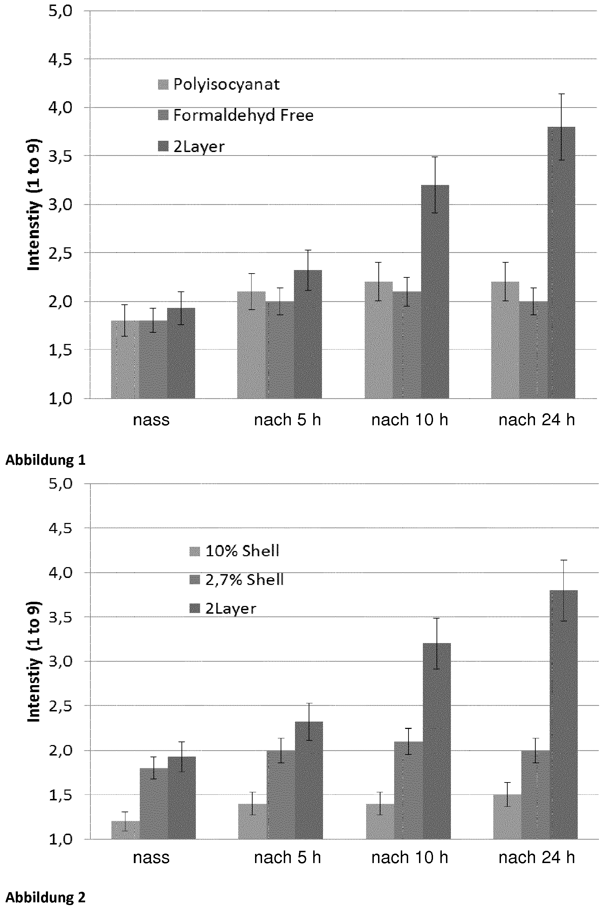

Gegenüber den beiden marktüblichen Vergleichsprodukten gemäß dem Stand der Technik zeichnen sich die neuen erfindungsgemäßen Kapseln dadurch aus, dass sie nicht nur unmittelbar nach dem Waschvorgang eine höhere Duftintensität aufweisen, sondern sich diese im Verlauf der Trocknung auf der Leine noch bis zu 24 Stunden deutlich wahrnehmbar weiter steigert, während die Vergleichsprodukte keine weitere Duftentwicklung aufweisen bzw nötigen Bruchkräfte für eine Freisetzung deutlich höher liegen . Dies ist auch noch einmal in **Abbildung 1** wiedergegeben.

### Anwendungstechnische Beispiele 3 sowie V3 und V4

Die doppelwandigen Kapseln gemäß Beispiel 1 wurden durch Zwangsapplikation auf Leinengewebe aufgebracht und dieses in einer Waschmaschine ohne Zugabe von Waschmittel bei 30°C 15 Minuten gewaschen. Das gewaschene Gewebe wurde sowohl in nassem wie im getrockneten Zustand hinsichtlich seiner Duftintensität von einem Panel bestehend aus 5 erfahrenen Testern auf einer Skala von (1 = parfümfrei bzw. nicht wahrnehmbar) bis (5 = intensiv) beurteilt (Beispiel 3). Zum Vergleich wurde Leinengewebe unter den gleichen Bedingungen mit handelsüblichen Kapseln auf polymerfreier Aminoplastbasis vergleichen, bei denen die Hüllsubstanz gegenüber einer vollständigen Verkapselung signifikant vermindert worden war, nämlich zum einen bis auf 10 % (Vergleichsbeispiel V3) und zum anderen sogar bis auf 2,7 % (Vergleichsbeispiel V4). Die Ergebnisse sind in **Tabelle 2** zusammengefasst; die Duftintensitäten stellen die Mittelwerte aus den Paneltests dar.

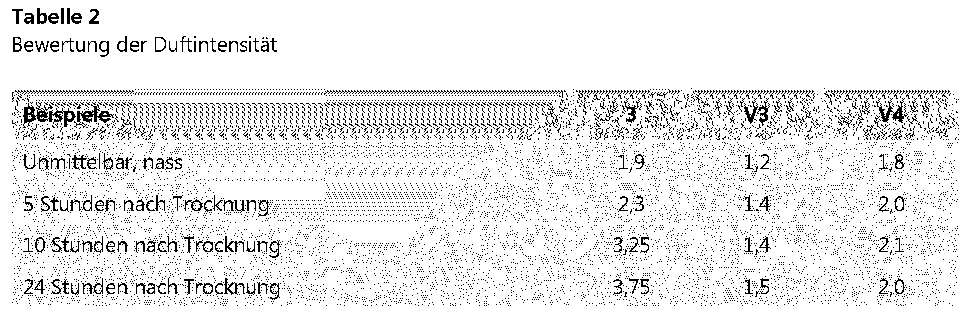

Gegenüber den beiden Vergleichsprodukten zeigen auch hier die erfindungsgemäßen Kapseln mit doppelter Hülle eine deutlich höhere Duftintensität, insbesondere im Verlauf der Trocknung. Es zeigt sich dabei insbesondere, dass die Reduzierung der Stärke der einwandigen Kapselhülle überraschenderweise keine geeignete Maßnahme darstellt, um die Duftfreisetzung zu verbessern. Dies wird auch noch einmal in **Abbildung 2** belegt.

## Patentansprüche

1. Formaldehydfreie Wirkstoffkapseln enthaltend oder bestehend aus einem flüssigen Kern, mindestens einer inneren und einer äußeren Hülle, durch folgende Schritte erhalten:
(a) Bereitstellen einer Ölphase enthaltend mindestens einen lipophilen Wirkstoff sowie gegebenenfalls mindestens einem Stabilisator;
(b) Versetzen der Ölphase mit mindestens einem Polyisocyanat;
(c) Bereitstellen einer wässrigen Phase enthaltend mindestens eine polymere Doppelbindungskomponente;
(d) Emulgierung der Ölphase aus Schritt (b) mit der wässrigen Phase aus Schritt (c);
(e) Versetzen der Emulsion aus Schritt (d) mit einem Polyamin,
(f) Versetzen der Emulsion aus Schritt (e) mit mindestens einem aromatischen Alkohol und mindestens einem von Formaldehyd verschiedenen aliphatischen oder aromatischen Aldehyd sowie gegebenenfalls mindestens einem filmbildenden Polymer;
(g) gegebenenfalls Versetzen der Emulsion aus Schritt (f) mit einem Vernetzungsmittel; und
(h) gegebenenfalls Abtrennen und Trocknen der gegebenenfalls vernetzten Kapseln.

2. Verfahren zur Herstellung von formaldehydfreien Wirkstoffkapseln enthaltend oder bestehend aus einem flüssigen Kern, mindestens einer inneren und einer äußeren Hülle, umfassend die folgenden Schritte:
(a) Bereitstellen einer Ölphase enthaltend mindestens einen lipophilen Wirkstoff sowie gegebenenfalls mindestens einem Stabilisator;
(b) Versetzen der Ölphase mit mindestens einem Polyisocyanat;
(c) eine polymere Doppelbindungskomponente;
(d) Emulgierung der Ölphase aus Schritt (b) mit der wässrigen Phase aus Schritt (c);
(e) Versetzen der Emulsion aus Schritt (d) mit einem Polyamin,
(f) Versetzen der Emulsion aus Schritt (e) mit mindestens einem aromatischen Alkohol und mindestens einem von Formaldehyd verschiedenen aliphatischen oder aromatischen Aldehyd sowie gegebenenfalls mindestens einem filmbildenden Polymer;
(g) gegebenenfalls Versetzen der Emulsion aus Schritt (f) mit einem Vernetzungsmittel; und
(h) gegebenenfalls Abtrennen und Trocknen der gegebenenfalls vernetzten Kapseln.

3. Verfahren nach Anspruch 2, **dadurch gekennzeichnet, dass** man lipophile Wirkstoffe Parfümöle oder öllösliche Riechstoffe oder Aromen einsetzt.

4. Verfahren nach den Ansprüchen 2 und/oder 3, **dadurch gekennzeichnet, dass** man Polyisocyanate einsetzt, die zwei oder drei Isocyanatgruppen aufweisen.

5. Verfahren nach mindestens einem der Ansprüche 2 bis 4, **dadurch gekennzeichnet, dass** man als Polyamine Guanidinverbindungen einsetzt.

6. Verfahren nach mindestens einem der Ansprüche 2 bis 5, **dadurch gekennzeichnet, dass** man als filmbildendes Polymer Polyvinylalkohol einsetzt.

7. Verfahren nach mindestens einem der Ansprüche 2 bis 6, **dadurch gekennzeichnet, dass** man aromatische Alkohole einsetzt, die ausgewählt sind aus der Gruppe, die gebildet wird von Brenzcatechin, Resorcin, Hydrochinon, 1,4-Naphthohydrochinon, Phloroglucin, Pyrogallol, Hydroxyhydrochinon sowie deren Gemischen.

8. Verfahren nach mindestens einem der Ansprüche 2 bis 7, **dadurch gekennzeichnet, dass** man aliphatische Aldehyde einsetzt, die ausgewählt sind aus der Gruppe, die gebildet wird Glyoxal, Glutardialdehyd, Succindialdehyd sowie deren Gemishen.

9. Verfahren nach mindestens einem der Ansprüche 2 bis 8, **dadurch gekennzeichnet, dass** man als Doppelbindungskomponente Ester der Phthalsäure einsetzt.

10. Waschmittel, enthaltend mindestens einen oberflächenaktiven Stoff sowie die Wirkstoffkapseln nach Anspruch 1.

11. Wäscheweichspülmittel, enthaltend mindestens einen oberflächenaktiven Stoff sowie die Wirkstoffkapseln nach Anspruch 1.

12. Mittel nach den Ansprüchen 10 und/oder 11, **dadurch gekennzeichnet, dass** sie die Wirkstoffkapseln in Mengen von 0,1 bis 10 Gew.-% - bezogen auf die Gesamtzusammensetzung - enthalten.

13. Verfahren zur Ausrüstung von Textilien, umfassend die folgenden Schritte:
(i) Bereitstellen einer wässrigen Flotte enthaltend die auszurüstenden Textilien;
(ii) Zugabe eines Waschmittels oder Wäscheweichspülmittels nach den Ansprüchen 11 und/oder 12;
(iii) Mechanische Behandlung der in der Flotte enthaltenen Textilien mit den Wirkstoffkapseln; und
(iv) Trocknen der Textilien

14. Verwendung von Wirkstoffkapseln nach Anspruch 1 zur Herstellung von Waschmitteln oder Wäscheweich-spülmitteln.

15. Verwendung von Wirkstoffkapseln nach Anspruch 1 zur Ausrüstung von Textilien, Garnen und textilen Flächengebilden

## Claims

1. Active ingredient capsules free of formaldehyde containing or consisting of a liquid core, at least one inner shell and one outer shell, obtained by the following steps:
(a) providing an oil phase containing at least one lipophilic active ingredient and optionally at least one stabilizer;
(b) adding at least one polyisocyanate to the oil phase;
(c) providing an aqueous phase comprising at least one polymeric double bond component;
(d) emulsifying the oil phase from step (b) with the aqueous phase from step (c);
(e) adding a polyamine to the emulsion of step (d),
(f) adding to the emulsion of step (e) at least one aromatic alcohol and at least one aliphatic or aromatic aldehyde other than formaldehyde, and optionally at least one film-forming polymer;
(g) optionally adding a crosslinking agent to the emulsion of step (f); and
(h) optionally separating and drying the optionally crosslinked capsules.

2. A process for preparing formaldehyde-free drug capsules containing or consisting of a liquid core, at least one inner shell and an outer shell, comprising the following steps:
(a) providing an oil phase containing at least one lipophilic active ingredient and optionally at least one stabilizer;
(b) adding at least one polyisocyanate to the oil phase;
(c) a polymeric double bond component;
(d) emulsifying the oil phase from step (b) with the aqueous phase from step (c);
(e) adding a polyamine to the emulsion from step (d),
(f) adding to the emulsion of step (e) at least one aromatic alcohol and at least one aliphatic or aromatic aldehyde other than formaldehyde, and optionally at least one film-forming polymer;
(g) optionally adding a crosslinking agent to the emulsion of step (f); and
(h) optionally separating and drying the optionally crosslinked capsules.

3. The process according to claim 2, **characterized in that** lipophilic active ingredients, perfume oils or oil-soluble fragrances or flavors are used.

4. The process according to claims 2 and/or 3, **characterized in that** polyisocyanates having two or three isocyanate groups are used.

5. The process according to at least one of claims 2 to 4, **characterized in that** guanidine compounds are used as polyamines.

6. The process according to at least one of claims 2 to 5, **characterized in that** polyvinyl alcohol is used as the film-forming polymer.

7. The process according to at least one of claims 2 to 6, **characterized in that** aromatic alcohols are used which are selected from the group formed by pyrocatechol, resorcinol, hydroquinone, 1,4-naphthohydroquinone, phloroglucin, pyrogallol, hydroxyhydroquinone and mixtures thereof.

8. The process according to at least one of claims 2 to 7, **characterized in that** aliphatic aldehydes are used which are selected from the group formed glyoxal, glutardialdehyde, succindialdehyde and mixtures thereof.

9. The process according to at least one of Claims 2 to 8, wherein esters of phthalic acid are used as the double-bond component.

10. Laundry detergent compositions comprising at least one surfactant and the active ingredient capsules according to claim 1.

11. Laundry softener compositions comprising at least one surface-active agent and the active ingredient capsules according to claim 1.

12. The compositions according to claims 10 and/or 11, **characterized in that** they contain the active ingredient capsules in amounts of from 0.1 to 10% by weight, based on the total composition.

13. A process for finishing textiles, comprising the following steps:
(i) providing an aqueous liquor containing the textiles to be finished;
(ii) adding a detergent or fabric softener according to claims 11 and/or 12;
(iii) treating the textiles contained in the liquor mechanically with the active ingredient capsules; and
(iv) drying the textiles.

14. Use of active ingredient capsules according to claim 1 for the production of detergents or laundry softeners.

15. Use of active ingredient capsules according to claim 1 for finishing textiles, yarns and textile fabrics.

## Revendications

1. Capsules de principe actif sans formaldéhyde contenant ou consistant en un noyau liquide, au moins une enveloppe intérieure et une enveloppe extérieure, obtenues par les étapes suivantes
(a) fournir une phase huileuse contenant au moins un ingrédient actif lipophile et, éventuellement, au moins un stabilisateur;
(b) ajouter au moins un polyisocyanate à la phase huileuse ;
(c) fournir une phase aqueuse contenant au moins un composant polymère à double liaison ;
(d) émulsionner la phase huileuse de l'étape (b) avec la phase aqueuse de l'étape (c) ;
(e) ajouter une polyamine à l'émulsion de l'étape (d),
(f) l'addition à l'émulsion de l'étape (e) d'au moins un alcool aromatique et d'au moins un aldéhyde aliphatique ou aromatique autre que le formaldéhyde et éventuellement d'au moins un polymère filmogène ;
(g) ajouter éventuel d'un agent de réticulation à l'émulsion de l'étape (f) ; et
(h) séparation et le séchage des capsules, si nécessaire, et des capsules réticulées.

2. Une procédé de production de capsules de principe actif sans formaldéhyde contenant ou consistant en un noyau liquide, au moins une enveloppe intérieure et une enveloppe extérieure, comprenant les étapes suivantes :
(a) fournir une phase huileuse contenant au moins un ingrédient actif lipophile et, éventuellement, au moins un stabilisateur;
(b) ajouter au moins un polyisocyanate à la phase huileuse ;
(c) fournir une phase aqueuse contenant au moins un composant polymère à double liaison ;
(d) émulsionner la phase huileuse de l'étape (b) avec la phase aqueuse de l'étape (c) ;
(e) ajouter une polyamine à l'émulsion de l'étape (d),
(f) l'addition à l'émulsion de l'étape (e) d'au moins un alcool aromatique et d'au moins un aldéhyde aliphatique ou aromatique autre que le formaldéhyde et éventuellement d'au moins un polymère filmogène ;
(g) ajouter éventuel d'un agent de réticulation à l'émulsion de l'étape (f) ; et
(h) séparation et le séchage des capsules, si nécessaire, et des capsules réticulées.

3. Le procédé selon la revendication 2, **caractérisé en ce que** les ingrédients actifs lipophiles sont des huiles de parfum ou des parfums ou arômes solubles dans l'huile.

4. Le procédé selon les revendications 2 et/ou 3, **caractérisé en ce que** l'on utilise des polyisocyanates, contenant deux ou trois groupes isocyanate.

5. Le procédé selon au moins une des revendications 2 à 4, **caractérisé en ce que** les composés de guanidine sont utilisés comme polyamines.

6. Le procédé selon au moins une des revendications 2 à 5, **caractérisé en ce que** l'alcool polyvinylique est utilisé comme polymère filmogène.

7. Le procédé selon au moins une des revendications 2 à 6, **caractérisé en ce que** l'on utilise des alcools aromatiques qui sont choisis dans le groupe constitué par le pyrocatéchol, le résorcinol, l'hydroquinone, la 1,4-naphtohydroquinone, le phloroglucinol, le pyrogallol, l'hydroxyhydroquinone et leurs mélanges.

8. Le procédé selon au moins une des revendications 2 à 7, **caractérisé en ce qu'**on utilise des aldéhydes aliphatiques qui sont choisis dans le groupe formé par le glyoxal, le glutardialdéhyde, le succindialdéhyde et leurs mélanges.

9. Le procédé selon au moins une des revendications 2 à 8, **caractérisé en ce que** des esters d'acide phtalique sont utilisés comme composant à double liaison.

10. Détergents contenant au moins un agent de surface et les capsules de principes actifs selon la revendication 1.

11. Agents adoucissant pour le linge contenant au moins une substance tensioactive et les capsules de la substance active selon la revendication 1.

12. Les compositions selon les revendications 10 et/ou 11, **caractérisées en ce qu'**elles contiennent les capsules de substance active en quantités de 0,1 à 10 % en poids - par rapport à la composition totale.

13. Une procédé d'ennoblissement des textiles, comprenant les étapes suivantes :
(i) fournir une liqueur aqueuse contenant les textiles à finir ;
(ii) l'ajout d'un détergent ou d'un assouplissant selon les revendications 11 et/ou 12 ;
(iii) le traitement mécanique des textiles contenus dans la liqueur avec les capsules d'ingrédients actifs ; et
(iv) le séchage des textiles

14. L'utilisation de capsules d'ingrédients actifs selon la revendication 1 pour la production de détergents ou d'agents adoucissants pour tissus.

15. L'utilisation de capsules de substance active selon la revendication 1 pour le finissage de textiles, fils et tissus
